# EUROPEAN PATENT APPLICATION

(11) **EP 4 057 635 A1**
(43) Date of publication of application: **14.09.2022**
(21) Application number: 21879092.1
(22) Date of filing: 13.08.2021
(51) Int. Cl.: H04N 21/478, G06Q 30/06

(54) **NETWORK DATA PROCESSING METHOD AND DEVICE**

(30) Priority: 13.10.2020 CN 202011092808
(71) Applicant: Beijing Dajia Internet Information Technology Co., Ltd., Beijing 100085 (CN)
(72) Inventor: LIU, Qiyu, Beijing 100085 (CN); ZHANG, Yang, Beijing 100085 (CN); XU, Jianpu, Beijing 100085 (CN); LI, Huan, Beijing 100085 (CN)
(74) Representative: Yang, Shu
(86) International application number: PCT/CN2021/112529
(87) International publication number: WO 2022/078045

(57) **Abstract**

The present disclosure relates to a method and apparatus for processing network data, belonging to the field of network technologies. The method includes: displaying an item setting interface of an anchor account, the item setting interface being configured to set an allowable transaction condition of an item; acquiring an allowable transaction condition of a target item in response to an operation of setting a transaction condition for the target item; and sending an item issuing request to a server, the item issuing request being configured to instruct the server to issue the target item to a live-streaming room of the anchor account and to open a transaction authority of the target item to a first audience account, and the first audience account meeting the allowable transaction condition of the target item.

## Description

The present disclosure is based on and claims priority of the Chinese Patent Application No. 202011092808.9, filed on October 13, 2020, which is incorporated herein by reference in its entirety.

### TECHNICAL FIELD

The present disclosure relates to the field of Internet technologies, and more particularly, to a method and apparatus for processing network data.

### BACKGROUND

With the development of network technologies, live streaming, as a new way of information dissemination, is welcomed by more and more users. In a live-streaming scenario, an anchor user makes live streaming in a live-streaming room, and audience users watch this live streaming in the live-streaming room. In order to increase the popularity of the live-streaming room, the anchor user provides welfare items for specific audience users.

In related technologies, the anchor user uses a bulletin board to prompt a condition for acquiring welfare items, e.g., make a prompt "offer a mobile phone to a user of fan group level 10", and then sends a private message to an audience user who meets the condition to acquire a mailing address and other information.

### SUMMARY

The present disclosure discloses a method and apparatus for processing network data. The technical solutions are summarized as follows.

According to an aspect of embodiments of the present disclosure, a method for processing network data is provided. The method includes:
displaying an item setting interface of an anchor account, wherein the item setting interface is configured to set an allowable transaction condition of an item, and the allowable transaction condition is configured to indicate a condition that an audience account needs to meet when performing item transaction processing;
acquiring an allowable transaction condition of a target item in response to an operation of setting a transaction condition for the target item, wherein the target item is any item in the item setting interface; and
sending an item issuing request to a server, wherein the item issuing request is configured to instruct the server to issue the target item to a live-streaming room of the anchor account and to open a transaction authority of the target item to a first audience account, and the first audience account meets the allowable transaction condition of the target item.

In some embodiments, the method further includes:
displaying item information of the target item and a corresponding setting indicator in an item selection interface of the anchor account, wherein the setting indicator is configured to indicate that the allowable transaction condition has been set, and the item selection interface is configured to select an item to be transacted during a live-streaming process of the anchor account; and
performing a step of sending the item issuing request to the server in response to a selection operation for the target item based on the item information.

In some embodiments, said displaying the item setting interface of the anchor account includes:
displaying a plurality of items in the item setting interface, wherein the plurality of items include items in an unset state, and the unset state is configured to indicate that the allowable transaction condition is not set.

In some embodiments, said displaying the item setting interface of the anchor account includes:
displaying a plurality of items in the item setting interface, wherein the plurality of items include items in a set state, and the set state is configured to indicate that the allowable transaction condition has been set; and
said acquiring the allowable transaction condition of the target item in response to the setting operation for the transaction condition for the target item includes:
acquiring a modified allowable transaction condition for the target item in response to an operation of modifying the transaction condition for the target item.

In some embodiments, the method for processing the network data further includes:
acquiring a transaction parameter of the target item in response to an operation of setting the transaction parameter of the target item, wherein the transaction parameter includes a first price of the target item corresponding to the first audience account, the first price is less than or equal to a second price of the target item corresponding to a second audience account, and the second audience account does not meet the allowable transaction condition.

In some embodiments, the method for processing the network data further includes:
sending a transaction closing request to the server in response to a setting cancellation operation for the target item, wherein the transaction closing request is configured to instruct the server to delete issuing information of the target item in the live-streaming room, and close a transaction authority of the target item.

According to another aspect of embodiments of the present disclosure, a method for processing network data is provided. The method includes:
displaying a live-streaming room interface of an anchor account, wherein the live-streaming room interface includes a transaction entry of a target item and an allowable transaction condition has been set for the target item, and the allowable transaction condition is configured to indicate a condition that an audience account needs to meet when performing item transaction processing;
acquiring account information of a logged-in user account in response to a triggering operation on the transaction entry; and
displaying a transaction editing page of the target item in a case that the logged-in user account is determined as a first audience account based on the account information, wherein the first audience account meets the allowable transaction condition of the target item.

In some embodiments, a setting indicator corresponding to the target item is displayed on the transaction entry, and the setting indicator is configured to indicate that the allowable transaction condition has been set; and
the method for processing the network data further includes:
receiving issuing information of the target item, wherein the issuing information includes the setting indicator corresponding to the target item.

In some embodiments, the method for processing the network data further includes:
displaying an item list of the anchor account in a case that the logged-in user account is determined not to be the first audience account based on the account information, wherein the item list includes the allowable transaction condition of the target item and a corresponding transaction button, and a state of the transaction button is an inoperable state;
modifying the state of the transaction button to an operable state in a case that authority opening information of the target item is received, wherein the authority opening information is configured to indicate that the logged-in user account meets the allowable transaction condition of the target item; and
displaying a transaction editing page of the target item in response to a triggering operation on the transaction button.

In some embodiments, the item list also includes current condition information of the logged-in user account; and
the method for processing the network data further includes:
updating the current condition information of the logged-in user account as target information, wherein the target information is configured to indicate that the allowable transaction condition of the target item has been met.

According to another aspect of embodiments of the present disclosure, a method for processing network data is provided. The method includes:
receiving an item issuing request, wherein the item issuing request is configured to instruct to issue a target item to a live-streaming room of an anchor account and to open a transaction authority of the target item to a first audience account, the first audience account meets an allowable transaction condition of the target item, and the allowable transaction condition is configured to indicate a condition that the audience account needs to meet when performing item transaction processing;
issuing the target item to the live-streaming room of the anchor account; and
opening the transaction authority of the target item to the first audience account.

In some embodiments, said issuing the target item to the live-streaming room of the anchor account includes:
sending issuing information of the target item to a plurality of user accounts in the live-streaming room, wherein the issuing information includes a setting indicator corresponding to the target item, and the setting indicator is configured to indicate that an allowable transaction condition has been set.

In some embodiments, said issuing the target item to the live-streaming room of the anchor account includes:
determining a target user account in the live-streaming room based on a type of the allowable transaction condition of the target item; and
sending the issuing information of the target item to the target user account, wherein the issuing information includes the setting indicator corresponding to the target item, and the setting indicator is configured to indicate that the allowable transaction condition has been set.

In some embodiments, said determining the target user account in the live-streaming room based on the type of the allowable transaction condition includes any of the followings:
determining the target user account in a case that the type of the allowable transaction condition is a target type, wherein the target user account is a plurality of user accounts in the live-streaming room, and the target type refers to a condition that a probability of meeting the allowable transaction condition within a target duration is greater than a probability threshold; and
determining the target user account in a case that the type of the allowable transaction condition is not the target type, wherein the target user account is an account that meets the allowable transaction condition at the current time.

In some embodiments, said opening the transaction authority of the target item to the first audience account includes:
determining account information of audience accounts in the live-streaming room; and
sending authority opening information to the audience account in a case that the account information of the audience account meets the allowable transaction condition of the target item, wherein the authority opening information is configured to indicate that the audience account meets the allowable transaction condition of the target item and the transaction authority of the target item has been opened to the audience account.

According to another aspect of embodiments of the present disclosure, an apparatus for processing network data is provided. The apparatus includes:
a displaying unit configured to display an item setting interface of an anchor account, wherein the item setting interface is configured to set an allowable transaction condition of an item, and the allowable transaction condition is configured to indicate a condition that an audience account needs to meet when performing item transaction processing;
an acquiring unit configured to acquire the allowable transaction condition of the target item in response to an operation of setting a transaction condition for the target item, wherein the target item is any item in the item setting interface; and
a sending unit configured to send an item issuing request to a server, wherein the item issuing request is configured to instruct the server to issue the target item to a live-streaming room of the anchor account and to open a transaction authority of the item to a first audience account, and the first audience account meeting the allowable transaction condition of the target item.

In some embodiments, the displaying unit is further configured to display item information of the target item and a corresponding setting indicator in an item selection interface of the anchor account, wherein the setting indicator is configured to indicate that the allowable transaction condition has been set, and the item selection interface is configured to select an item to be transacted during a live-streaming process of the anchor account; and
the sending unit is further configured to perform a step of sending the item issuing request to the server in response to a selection operation for the target item based on the item information.

In some embodiments, the displaying unit is configured to display a plurality of items in the item setting interface, wherein the plurality of items include items in an unset state, and the unset state is configured to indicate that the allowable transaction condition has not been set.

In some embodiments, the displaying unit is configured to display a plurality of items in the item setting interface, wherein the plurality of items include items in a set state, and the set state is configured to indicate that the allowable transaction condition has been set; and
the acquiring unit is configured to acquire a modified allowable transaction condition for the target item in response to an operation of modifying the transaction condition for the target item.

In some embodiments, the acquiring unit is further configured to acquire a transaction parameter of the target item in response to an operation of setting the transaction parameter of the target item, wherein the transaction parameter includes a first price of the target item corresponding to the first audience account, the first price is less than or equal to a second price of the target item corresponding to a second audience account, and the second audience account does not meet the allowable transaction condition.

In some embodiments, the sending unit is further configured to send a transaction closing request to the server in response to a setting cancellation operation for the target item, wherein the transaction closing request is configured to instruct the server to delete issuing information of the target item in the live-streaming room, and close a transaction authority of the target item.

According to a fifth aspect of embodiments of the present disclosure, an apparatus for processing network data is provided. The apparatus includes:
a displaying unit configured to display a live-streaming room interface of an anchor account, wherein the live-streaming room interface includes a transaction entry of a target item andan allowable transaction condition has been set for the target item, and the allowable transaction condition is configured to indicate a condition that an audience account needs to meet when performing item transaction processing;
an acquiring unit configured to acquire account information of a logged-in user account in response to a triggering operation on the transaction entry, wherein
the displaying unit is further configured to display a transaction editing page of the target item in a case that the logged-in user account is determined as a first audience account based on the account information, wherein the first audience account meets the allowable transaction condition of the target item.

In some embodiments, a setting indicator corresponding to the target item is displayed on the transaction entry, and the setting indicator is configured to indicate that the allowable transaction condition has been set; and
the apparatus for processing the network data further includes:
a first receiving unit configured to receive issuing information of the target item, wherein the issuing information includes the setting indicator corresponding to the target item.

In some embodiments, the apparatus further includes:
the displaying unit is further configured to display an item list of the anchor account in a case that the logged-in user account is determined not to be the first audience account based on the account information, wherein the item list includes the allowable transaction condition of the target item and a corresponding transaction button, and a state of the transaction button is an inoperable state;
a second receiving unit configured to receive authority opening information of the target item, wherein the authority opening information is configured to indicate that the logged-in user account meets the allowable transaction condition of the target item; and
a modifying unit configured to modify a state of the transaction button as an operable state, wherein
the displaying unit is further configured to display a transaction editing page of the target item in response to a triggering operation on the transaction button.

In some embodiments, the item list also includes current condition information of the logged-in user account corresponding to the allowable transaction condition of the target item; and
the apparatus for processing the network data further includes:
an updating unit configured to update the current condition information of the logged-in user account as target information, wherein the target information is configured to indicate that the allowable transaction condition of the target item has been met.

According to another aspect of embodiments of the present disclosure, an apparatus for processing network data is provided. The apparatus includes:
a receiving unit configured to receive an item issuing request, the item issuing request is configured to instruct to issue a target item to a live-streaming room of an anchor account and to open a transaction authority of the target item to a first audience account, the first audience account meets an allowable transaction condition for the target item, and the allowable transaction condition is configured to indicate a condition that the audience account needs to meet when performing item transaction processing;
an issuing unit configured to issue the target item to the live-streaming room of the anchor account; and
an opening unit configured to open the transaction authority of the target item to the first audience account.

In some embodiments, the issuing unit is configured to send issuing information of the target item to a plurality of user accounts in the live-streaming room, wherein the issuing information includes a setting indicator corresponding to the target item, and the setting indicator is configured to indicate that the allowable transaction condition has been set.

In some embodiments, the issuing unit is configured to:
determine a target user account in the live-streaming room based on a type of the allowable transaction condition of the target item; and
send the issuing information of the target item to the target user account, wherein the issuing information includes the setting indicator corresponding to the target item, and the setting indicator is configured to indicate that the allowable transaction condition has been set.

In some embodiments, the issuing unit is configured to perform any of the followings:
determining the target user account in a case that the type of the allowable transaction condition is a target type, wherein the target user account is a plurality of user accounts in the live-streaming room, and the target type refers to a condition that a probability of meeting the allowable transaction condition within a target duration is greater than a probability threshold; and
determining the target user account in a case that the type of the allowable transaction condition is not the target type, wherein the target user account is an account that meets the allowable transaction condition at the current time.

In some embodiments, the opening unit is configured to:
determine account information of audience accounts in the live-streaming room; and
send authority opening information to the audience account in a case that the account information of the audience account meets the allowable transaction condition of the target item, wherein the authority opening information is configured to indicate that the audience account meets the allowable transaction condition of the target item and the transaction authority of the target item has been opened to the audience account.

According to a seventh aspect of the embodiments of the present disclosure, a terminal is provided. The terminal includes:
one or more processors; and
one or more memories configured to store program codes executable by the one or more processors, wherein
the one or more processors are configured to execute the program codes so as to implement the following steps: displaying an item setting interface of an anchor account, wherein the item setting interface is configured to set an allowable transaction condition of an item, and the allowable transaction condition is configured to indicate a condition that an audience account needs to meet when performing item transaction processing;
acquiring an allowable transaction condition of a target item in response to an operation of setting a transaction condition for the target item, wherein the target item is any item in the item setting interface; and
sending an item issuing request to a server, wherein the item issuing request is configured to instruct the server to issue the target item to a live-streaming room of the anchor account and to open a transaction authority of the target item to a first audience account, and the first audience account meets the allowable transaction condition of the target item.

In some embodiments, the one or more processors are configured to execute the program codes so as to implement the following steps:
displaying item information of the target item and a corresponding setting indicator in an item selection interface of the anchor account, wherein the setting indicator is configured to indicate that the allowable transaction condition has been set, and the item selection interface is configured to select an item to be transacted during a live-streaming process of the anchor account; and
performing a step of sending the item issuing request to the server in response to a selection operation for the target item based on the item information.

In some embodiments, the one or more processors are configured to execute the program codes so as to implement the following steps:
displaying a plurality of items in the item setting interface, wherein the plurality of items include items in an unset state, and the unset state is configured to indicate that the allowable transaction condition has not been set.

In some embodiments, a plurality of items are displayed in the item setting interface, the plurality of items include items in a set state, and the set state is configured to indicate that the allowable transaction condition has been set; and
the one or more processors are configured to execute the program codes so as to implement the following steps:
acquiring a modified allowable transaction condition for the target item in response to an operation of modifying the transaction condition for the target item.

In some embodiments, the one or more processors are configured to execute the program codes so as to implement the following steps:
acquiring a transaction parameter of the target item in response to an operation of setting the transaction parameter of the target item, wherein the transaction parameter includes a first price of the target item corresponding to the first audience account, the first price is less than or equal to a second price of the target item corresponding to a second audience account, and the second audience account does not meet the allowable transaction condition.

In some embodiments, the one or more processors are configured to execute the program codes so as to implement the following steps:
sending a transaction closing request to the server in response to a setting cancellation operation for the target item, wherein the transaction closing request is configured to instruct the server to delete issuing information of the target item in the live-streaming room, and close a transaction authority of the target item.

According to another aspect of the embodiments of the present disclosure, a terminal is provided, which includes:
one or more processors; and
one or more memories configured to store program codes executable by the one or more processors, wherein
the one or more processors are configured to execute the program codes so as to implement the following steps:
displaying a live-streaming room interface of an anchor account, wherein the live-streaming room interface includes a transaction entry of a target item and an allowable transaction condition has been set for the target item, and the allowable transaction condition is configured to indicate a condition that an audience account needs to meet when performing item transaction processing;
acquiring account information of a logged-in user account in response to a triggering operation on the transaction entry; and
displaying a transaction editing page of the target item in a case that the logged-in user account is determined as a first audience account based on the account information, wherein the first audience account meets the allowable transaction condition of the target item.

In some embodiments, a setting indicator corresponding to the target item is displayed on the transaction entry, and the setting indicator is configured to indicate that the allowable transaction condition has been set; and
the one or more processors are configured to execute the program codes so as to implement the following steps:
receiving issuing information of the target item, and the issuing information includes the setting indicator corresponding to the target item.

In some embodiments, the one or more processors are configured to execute the program codes so as to implement the following steps:
displaying an item list of the anchor account in a case that that the logged-in user account is determined not to be the first audience account based on the account information, wherein the item list includes the allowable transaction condition of the target item and a corresponding transaction button, and a state of the transaction button is an inoperable state;
modifying the state of the transaction button as an operable state in a case that authority opening information of the target item is received, wherein the authority opening information is configured to indicate that the logged-in user account meets the allowable transaction condition of the target item; and
displaying a transaction editing page of the target item in response to a triggering operation on the transaction button.

In some embodiments, the item list also includes current condition information of the logged-in user account; and
the one or more processors are configured to execute the program codes so as to implement the following steps: the method for processing the network data further includes:
updating the current condition information of the logged-in user account as target information, wherein the target information is configured to indicate that the allowable transaction condition of the target item has been met.

According to another aspect of the embodiments of the present disclosure, a server is provided, which includes:
one or more processors; and
one or more memories configured to store program codes executable by the one or more processors, wherein
the one or more processors are configured to execute the program codes so as to implement the following steps:
receiving an item issuing request, wherein the item issuing request is configured to instruct to issue a target item to a live-streaming room of an anchor account and to open a transaction authority of the target item to a first audience account, the first audience account meets an allowable transaction condition of the target item, and the allowable transaction condition is configured to indicate a condition that the audience account needs to meet when performing item transaction processing;
issuing the target item to the live-streaming room of the anchor account; and
opening the transaction authority of the target item to the first audience account.

In some embodiments, the one or more processors are configured to execute the program codes so as to implement the following steps:
sending issuing information of the target item to a plurality of user accounts in the live-streaming room, wherein the issuing information includes a setting indicator corresponding to the target item, and the setting indicator is configured to indicate that an allowable transaction condition has been set.

In some embodiments, the one or more processors are configured to execute the program codes so as to implement the following steps:
determining a target user account in the live-streaming room based on a type of the allowable transaction condition of the target item; and
sending issuing information of the target item to the target user account, wherein the issuing information includes the setting indicator corresponding to the target item, and the setting indicator is configured to indicate that the allowable transaction condition has been set.

In some embodiments, the one or more processors are configured to execute the program codes so as to implement the following steps:
determining the target user account in a case that the type of the allowable transaction condition is a target type, wherein the target user account is a plurality of user accounts in the live-streaming room, and the target type refers to a condition that a probability of meetingthe allowable transaction condition within a target duration is greater than a probability threshold; and
determining the target user account in a case that the type of the allowable transaction condition is not the target type, wherein the target user account is an account that meets the allowable transaction condition at the current time.

In some embodiments, the one or more processors are configured to execute the program codes so as to implement the following steps:
determining account information of audience accounts in the live-streaming room; and
sending authority opening information to the audience account in a case that the account information of the audience account meets the allowable transaction condition of the target item, wherein the authority opening information is configured to indicate that the audience account meets the allowable transaction condition of the target item and the transaction authority of the target item has been opened to the audience account.

According to another aspect of embodiments of the present disclosure, a non-volatile computer-readable storage medium is provided, wherein program codes in the computer-readable storage medium, which being executed by a processor of a terminal, enable the terminal to perform the following steps:
displaying an item setting interface of an anchor account, wherein the item setting interface is configured to set an allowable transaction condition of an item, and the allowable transaction condition is configured to indicate a condition that an audience account needs to meet when performing item transaction processing;
acquiring an allowable transaction condition of the target item in response to an operation of setting a transaction condition for the target item, wherein the target item is any item in the item setting interface; and
sending an item issuing request to a server, wherein the item issuing request is configured to instruct the server to issue the target item to a live-streaming room of the anchor account and to open a transaction authority of the target item to a first audience account, and the first audience account meets the allowable transaction condition of the target item.

According to another aspect of embodiments of the present disclosure, a non-volatile computer-readable storage medium is provided, wherein program codes in the computer-readable storage medium, which being executed by a processor of a terminal, enable the terminal to perform the following steps:
displaying a live-streaming room interface of an anchor account, wherein the live-streaming room interface includes a transaction entry of a target item and an allowable transaction condition has been set for the target item, and the allowable transaction condition is configured to indicate a condition that an audience account needs to meet when performing item transaction processing;
acquiring account information of a logged-in user account in response to a triggering operation on the transaction entry; and
displaying a transaction editing page of the target item in a case that the logged-in user account is determined as a first audience account based on the account information, wherein the first audience account meets the allowable transaction condition of the target item.

According to another aspect of embodiments of the present disclosure, a non-volatile computer-readable storage medium is provided, wherein program codes in the computer-readable storage medium, which being executed by a processor of a server, enable the server to perform the following steps:
receiving an item issuing request, wherein the item issuing request is configured to instruct to issue the target item to a live-streaming room of an anchor account and to open a transaction authority of the target item to a first audience account, the first audience account meets an allowable transaction condition of the target item, and the allowable transaction condition is configured to indicate a condition that the audience account needs to meet when performing item transaction processing;
issuing the target item to the live-streaming room of the anchor account; and
opening the transaction authority of the target item to the first audience account.

According to another aspect of embodiments of the present disclosure, a computer program product is provided. The computer program product includes a computer program, which, when executed by a processor, performs the following steps:
displaying an item setting interface of an anchor account, wherein the item setting interface is configured to set an allowable transaction condition of an item, and the allowable transaction condition is configured to indicate a condition that an audience account needs to meet when performing item transaction processing;
acquiring an allowable transaction condition of a target item in response to an operation of setting a transaction condition for the target item, wherein the target item is any item in the item setting interface; and
sending an item issuing request to a server, wherein the item issuing request is configured to instruct the server to issue the target item to a live-streaming room of the anchor account and to open a transaction authority of the target item to a first audience account, and the first audience account meeting the allowable transaction condition of the target item.

According to another aspect of embodiments of the present disclosure, a computer program product is provided. The computer program product includes a computer program, which, when executed by a processor, performs the following steps:
displaying a live-streaming room interface of an anchor account, wherein the live-streaming room interface includes a transaction entry of a target item and an allowable transaction condition has been set for the target item, and the allowable transaction condition is configured to indicate a condition that an audience account needs to meet when performing item transaction processing;
acquiring account information of a logged-in user account in response to a triggering operation on the transaction entry; and
displaying a transaction editing page of the target item in a case that the logged-in user account is determined as a first audience account based on the account information, wherein the first audience account meets the allowable transaction condition of the target item.

According to another aspect of embodiments of the present disclosure, a computer program product is provided. The computer program product includes a computer program, which, when executed by a processor, performs the following steps:
displaying a live-streaming room interface of an anchor account, wherein the live-streaming room interface includes a transaction entry of a target item and an allowable transaction condition has been set for the target item, and the allowable transaction condition is configured to indicate a condition that an audience account needs to meet when performing item transaction processing;
acquiring account information of a logged-in user account in response to a triggering operation on the transaction entry; and
displaying a transaction editing page of the target item in a case that the logged-in user account is determined as a first audience account based on the account information, wherein the first audience account meets the allowable transaction condition of the target item.

By displaying an item setting interface for the anchor account, the anchor user can set the condition that the audience user needs to meet when performing item transaction processing, then request the server to issue the item for which the condition has been set to the live-streaming room, and open the transaction authority of this item to the audience user who meets the condition. In this way, the audience user who meets the condition can transact items on his/her own and enjoy benefits. A new way of providing welfare items is provided in the live-streaming room, which improves the convenience of providing welfare items.

It should be understood that the above general description and the following detailed description are only exemplary and illustrative, and not intended to limit the present disclosure.

### BRIEF DESCRIPTION OF THE DRAWINGS

The drawings herein are incorporated into the description and constitute a part of the description, show embodiments that are consistent with the present disclosure, and are used together with the description to explain the principles of the present disclosure, rather than constituting an improper limitation to the present disclosure.
FIG. 1 is a schematic diagram of an implementation environment of a method for processing network data according to an exemplary embodiment;
FIG. 2 is a flowchart of a method for processing network data according to an exemplary embodiment;
FIG. 3 is a flowchart of a method for processing network data according to an exemplary embodiment;
FIG. 4 is a flowchart of a method for processing network data according to an exemplary embodiment;
FIG. 5 is a flowchart of a method for processing network data according to an exemplary embodiment;
FIG. 6 is a schematic diagram of an item setting interface according to an exemplary embodiment;
FIG. 7 is a schematic diagram of an item setting interface according to an exemplary embodiment;
FIG. 8 is a schematic diagram of an item selection interface according to an exemplary embodiment;
FIG. 9 is a schematic diagram of an item management interface according to an exemplary embodiment;
FIG. 10 is a schematic diagram of a transaction process guiding interface according to an exemplary embodiment;
FIG. 11 is a schematic diagram of an item condition setting interface according to an exemplary embodiment;
FIG. 12 is a schematic diagram of a sub-option according to an exemplary embodiment;
FIG. 13 is a schematic diagram of a sub-option according to an exemplary embodiment;
FIG. 14 is a schematic diagram of an item condition setting interface according to an exemplary embodiment;
FIG. 15 is a schematic diagram of an item setting interface according to an exemplary embodiment;
FIG. 16 is a schematic diagram of an item selection interface according to an exemplary embodiment;
FIG. 17 is a schematic diagram of an item setting interface according to an exemplary embodiment;
FIG. 18 is a schematic diagram of an item setting interface according to an exemplary embodiment;
FIG. 19 is a schematic diagram of a live-streaming room interface according to an exemplary embodiment;
FIG. 20 is a schematic diagram of a live-streaming room interface according to an exemplary embodiment;
FIG. 21 is a schematic diagram of a live-streaming room interface according to an exemplary embodiment;
FIG. 22 is a schematic diagram of a live-streaming room interface according to an exemplary embodiment;
FIG. 23 is a block diagram of an apparatus for processing network data according to an exemplary embodiment;
FIG. 24 is a block diagram of an apparatus for processing network data according to an exemplary embodiment;
FIG. 25 is a block diagram of an apparatus for processing network data according to an exemplary embodiment;
FIG. 26 is a block diagram of a terminal according to an exemplary embodiment; and
FIG. 27 is a block diagram of a server according to an exemplary embodiment.

### DETAILED DESCRIPTION

In order to make a person of ordinary skill in the art better understand the technical solutions of the present disclosure, the technical solutions in the embodiments of the present disclosure are clearly and completely described in the following with reference to the accompanying drawings.

It should be noted that the terms "first", "second" and the like in the description and claims, as well as the above-mentioned drawings, of the present disclosure are used to distinguish similar objects, but not necessarily used to describe a specific order or precedence order. It should be understood that data used in this way may be interchanged where appropriate so that the embodiments of the present disclosure described herein can be implemented in a sequence other than those illustrated or described herein. The implementations described the following exemplary embodiments are not all the embodiments consistent with the present disclosure. On the contrary, these embodiments are simply examples of apparatuses and methods consistent with some aspects of the present disclosure, as detailed in the appended claims.

Among the terms "at least one", "a plurality of' and "each" as used in the present disclosure, "at least one" includes one, two or more, "a plurality of' includes two or more, and "each" refers to each of the corresponding plurality.

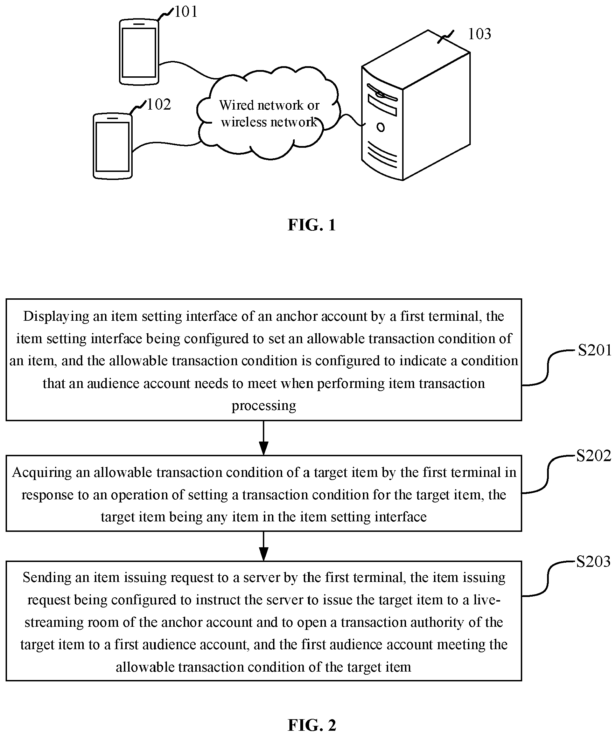

FIG. 1 is a schematic diagram of an implementation environment involved in a method for processing network data according to an exemplary embodiment. Referring to FIG. 1, the implementation environment includes a first terminal 101, a second terminal 102 and a server 103.

The first terminal 101 and the second terminal 102 are smart phones, tablet computers, portable computers, desk computers or other devices. The first terminal 101 and the second terminal 102 are respectively installed with a target application, which provides a live-streaming function and an item transaction processing function.

The first terminal 101 and the second terminal 102 are respectively logged with different accounts. For example, the first terminal 101 is logged with an anchor account, and the second terminal 102 is logged with an audience account.

The server 103 may be a server, a server cluster consisting of a plurality of servers, a cloud computing platform, a virtualizing center, or the like. The server 103 provides a background service for the target application.

The first terminal 101 and the second terminal 102 are connected to the server 103 via a wireless network or a wired network, such that the first terminal 101 and the second terminal 102 perform data interaction with the server 103.

The first terminal 101 or the second terminal 102 generally refers to one of a plurality of terminals. A person skilled in the art may know that the number of the aforementioned terminals may be more or less. For example, the above-mentioned terminal is only one, or the above-mentioned terminals are in the dozens or hundreds, or more. In this case, the above-mentioned implementation environment also includes other terminals. The number and type of the terminals are not limited in the embodiments of the present disclosure.

FIG. 2 is a flowchart of a method for processing network data according to an exemplary embodiment. As shown in FIG. 2, this method for processing the network data is applied in the first terminal and includes the following steps.

In S201, the first terminal displays an item setting interface of an anchor account, the item setting interface is configured to set an allowable transaction condition of an item, and the allowable transaction condition is configured to indicate a condition that an audience account needs to meet when performing item transaction processing.

In S202, the first terminal acquires an allowable transaction condition of a target item in response to an operation of setting a transaction condition for the target item, and the target item is any item in the item setting interface.

In S203, the first terminal sends an item issuing request to a server, the item issuing request is configured to instruct the server to issue the target item to a live-streaming room of the anchor account and to open a transaction authority of the target item to a first audience account, and the first audience account meets the allowable transaction condition of the target item.

According to the method provided by this embodiment of the present disclosure, by displaying an item setting interface for the anchor account, the anchor user can set the condition that the audience user needs to meet when performing item transaction processing, then request the server to issue the item for which the condition has been set to the live-streaming room, and open the transaction authority of the item to the audience user who meets the condition. In this way, the audience user who meets the condition can transact items on his/her own and enjoy benefits. A new way of providing welfare items is provided in the live-streaming room, which improves the convenience of providing welfare items and well meets the needs of the anchor user to provide welfare items to specific audience users.

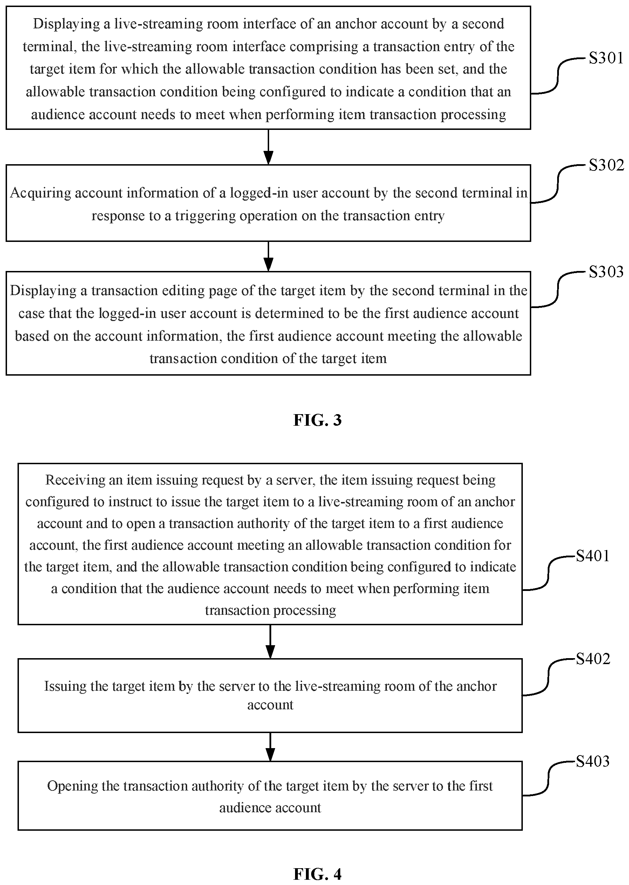

FIG. 3 is a flowchart of a method for processing network data according to an exemplary embodiment. As shown in FIG. 3, this method for processing the network data is applied in a second terminal and includes the following steps.

In S301, the second terminal displays a live-streaming room interface of an anchor account, the live-streaming room interface includes a transaction entry of the target item for which an allowable transaction condition has been set, and the allowable transaction condition is configured to indicate a condition that an audience account needs to meet when performing item transaction processing.

In S302, the second terminal acquires account information of a logged-in user account in response to a triggering operation to the transaction entry.

In S303, the second terminal displays a transaction editing page of the target item in a case that the logged-in user account is determined as the first audience account based on the account information, and the first audience account meets the allowable transaction condition of the target item.

According to the method provided by this embodiment of the present disclosure, the transaction entry for the item is displayed in the live-streaming room, and the second terminal displays the transaction editing page of the item for the user to edit an order in a case that the logged-in user account meets the allowable transaction condition of the item and acquires the transaction authority, and the transaction entry is triggered. In this way, the anchor user only needs to set the allowable transaction condition of the item and issue the item to the live-streaming room, and then the audience user who meets the condition can transact items on his/her own and enjoy benefits. A new way of providing welfare items is provided in the live-streaming room, which improves the convenience of providing welfare items and well meets the needs of the anchor user to provide welfare items to specific audience users.

FIG. 4 is a flowchart of a method for processing network data according to an exemplary embodiment. As shown in FIG. 4, this method for processing the network data is applied in a server and includes the following steps.

In S401, the server receives an item issuing request, the item issuing request is configured to instruct to issue a target item to a live-streaming room of an anchor account and to open a transaction authority of the target item to a first audience account, the first audience account meets an allowable transaction condition for the target item, and the allowable transaction condition is configured to indicate a condition that the audience account needs to meet when performing item transaction processing.

In S402, the server issues the target item to the live-streaming room of the anchor account.

In S403, the server opens the transaction authority of the target item to the first audience account.

According to the method provided by this embodiment of the present disclosure, after the item issuing request from the anchor user is received, the item for which the allowable transaction condition has been set is issued to the live-streaming room, and the transaction authority of this item is opened to the audience user who meets the condition. In this way, the audience user who meets the condition can transact items on his/her own and enjoy benefits. A new way of providing welfare items is provided in the live-streaming room, which improves the convenience of providing welfare items and well meets the needs of the anchor user to provide welfare items to specific audience users.

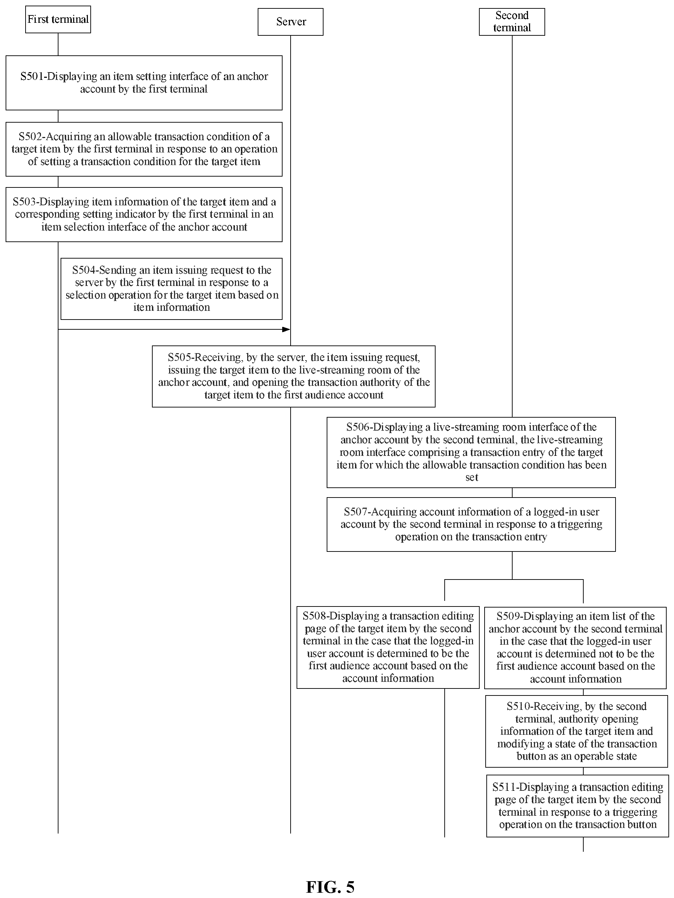

FIG. 5 is a flowchart of a method for processing network data according to an exemplary embodiment, which is described by taking the interactions between a first terminal and a server and between a second terminal and the server as an example. As shown in FIG. 5, this method for processing the network data includes the following steps.

In S501, the first terminal displays an item setting interface of an anchor account, the item setting interface is configured to set an allowable transaction condition of an item, and the allowable transaction condition is configured to indicate a condition that an audience account needs to meet when performing item transaction processing.

The anchor account is an account used by an anchor user to log in to a target application (such as a live-streaming application) on a first terminal, and the anchor user performs live streaming in a live-streaming room based on the anchor account. The audience account indicates an identity of this account in the live-streaming room and this account acts as an audience in the live-streaming room. In some scenarios, this account can also perform a live-streaming function, e.g., starting the live streaming by itself, which is referred to as the anchor account at this time.

In some embodiments, the allowable transaction condition that the audience account needs to meet includes any of the followings: a duration of the audience account staying in the live-streaming room is greater than or equal to a target duration; the number of transactions made by the audience account in the live-streaming room is greater than or equal to a first number, and this number of transactions refers to the number of transactions made by the audience account within a first target time period; the audience account is a fan of the anchor account; a level of a fan base to which the audience account belongs is greater than or equal to a target level; and the number of transactions made by the audience account in the live-streaming room is less than a second number, this number of transactions refers to a cumulative number of transactions made by the audience account, or the number of transactions made by the audience account within a second target time period, and the second target time period is longer than the first target time period.

The duration of staying in the live-streaming room also refers to a watching duration. The number of transactions in the live-streaming room refers to the number of times an item is purchased in the live-streaming room, that is, an order placement number. The fan base refers to a fan group. The above-mentioned transaction permitting condition is only some examples, or there may also be other allowable transaction conditions. The allowable transaction conditions are not limited in the embodiments of the present disclosure. The allowable transaction condition also refers to a purchase condition. By setting the purchase condition, the anchor user can provide purchasable items for specific audience users. In addition, a variety of purchase conditions are further provided, which can help the anchor users effectively increase the popularity of the live-streaming room.

In some embodiments, that the item setting interface of the anchor account is displayed includes: a plurality of items are displayed in the item setting interface, the plurality of items include items in an unset state, and the unset state is used to indicate that the allowable transaction condition has not been set. By providing a function of setting the transaction condition, the anchor user can set the allowable transaction condition of the item according to his/her needs, which improves the flexibility of item setting.

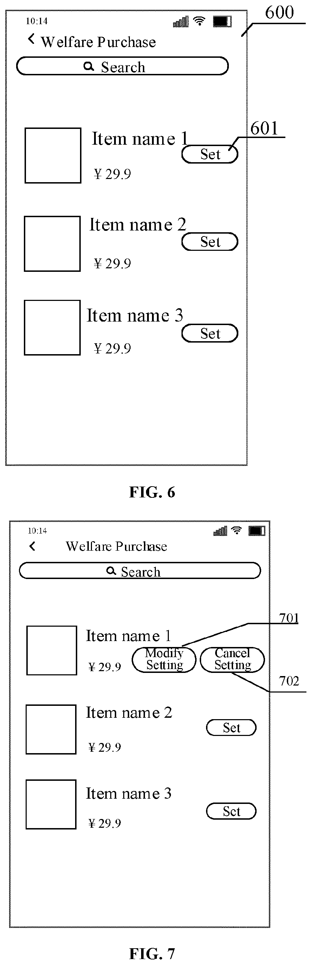

For an item in the item setting interface, the first terminal indicates what state the item is currently in by displaying a corresponding button. For example, for an item that is currently in an unset state, the first terminal displays a "Set" button corresponding to this item. FIG. 6 is a schematic diagram of an item setting interface according to an exemplary embodiment. As shown in FIG. 6, a "Set" button 601 is correspondingly displayed for a first item in the item setting interface 600, and means that an allowable transaction condition has not been set for this item. The anchor user performs a transaction condition setting operation for any item in an unset state in the item setting interface, e.g., clicking the "Set" button corresponding to this item, so as to set the allowable transaction condition of this item.

In some embodiments, that the item setting interface of the anchor account is displayed by the first terminal includes: a plurality of items in the item setting interface are displayed, the plurality of items include items in a set state, and the set state is used to indicate that the allowable transaction condition has been set. By providing a function of modifying the transaction condition, the anchor user can modify the allowable transaction condition of the item according to his/her needs, which improves the flexibility of item setting.

For an item in a set state in the item setting interface, the first terminal displays a "Cancel Setting " button and a "Modify Setting" button corresponding to this item. FIG. 7 is a schematic diagram of an item setting interface according to an exemplary embodiment. As shown in FIG. 7, a "Modify Setting" button 701 and a "Cancel Setting" button 702 are correspondingly displayed for a first item in the item setting interface. The anchor user performs an operation of modifying the transaction condition for any item in a set state in the item setting interface, e.g., clicking the "Modify Setting" button corresponding to this item, so as to modify the allowable transaction condition of this item.

For the display of the item setting interface, in some embodiments, the first terminal displays an item selection interface, the item selection interface is configured to select an item to be transacted during the live-streaming process of the host account. A function entry is provided in the item selection interface and configured to set the allowable transaction condition of the item; and the first terminal displays the item setting interface in response to a trigger operation for the function entry. By providing an entry to the item setting interface in one interface, the anchor user can quickly enter the item setting interface through this entry.

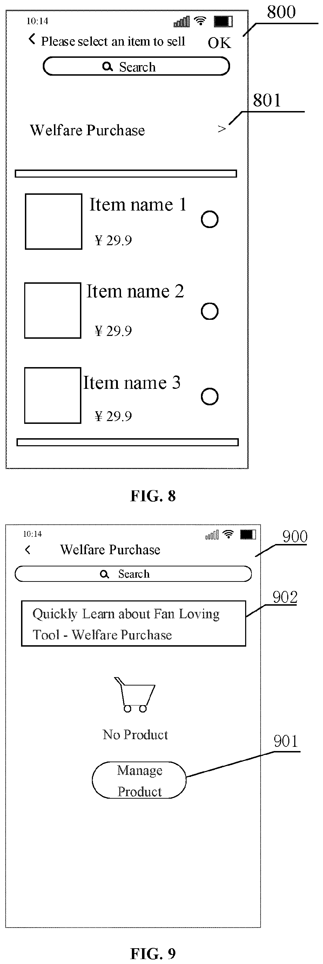

FIG. 8 is a schematic diagram of an item selection interface according to an exemplary embodiment. As shown in FIG. 8, a function entry 801 is provided in the item selection interface 800. Text information of "Welfare Purchase" is correspondingly displayed at the function entry 801. The anchor user clicks the function entry 801 to trigger the first terminal to display the item setting interface 600 shown in FIG. 6.

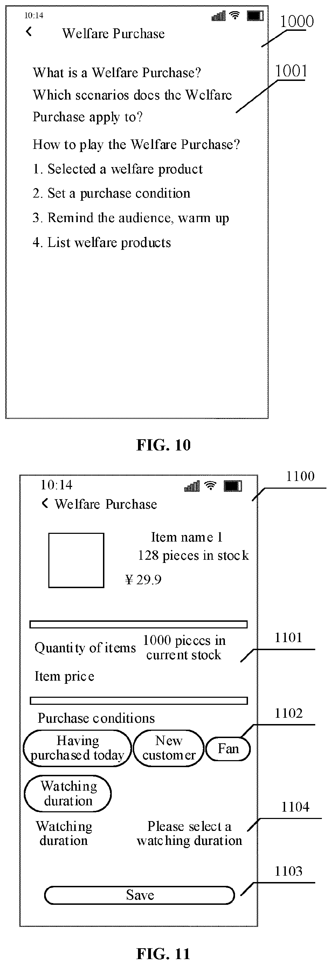

This embodiment of the present disclosure is described by taking that the anchor account has a corresponding item as an example. In a case that the anchor account has no corresponding item, the first terminal displays an item management interface for adding an item after the anchor user clicks the function entry 801 in FIG. 8. FIG. 9 is a schematic diagram of an item management interface according to an exemplary embodiment. The item management interface 900 includes a button 901 which displays text information of "Manage Products". The anchor user clicks the button 901 to trigger the first terminal to perform an item adding process, which includes selecting a category of an item to be added, uploading item information such as a picture and price of the item and submitting them for review. In a case that the review is passed, the item addition is completed, and the added item is displayed when the item management interface is entered again. As shown in FIG. 9, function prompt information 902, i.e., "Quickly Learn about Fan Loving Tool - Welfare Purchase" is also displayed on the item management interface. The anchor user clicks this piece of function prompt information 902 and triggers the first terminal to display a transaction process guiding interface, which displays a process that the anchor user provides an item to a specific audience user. FIG. 10 is a schematic diagram of a transaction process guiding interface according to an exemplary embodiment. Introduction information 1001 of "Welfare Purchase" is displayed on the transaction process guiding interface 1000.

In S502, the first terminal acquires an allowable transaction condition of a target item in response to an operation of setting a transaction condition for the target item, and the target item is any item in the item setting interface.

For a case that the target item is an item in an unset state in the item setting interface, the anchor user selects any item from the item setting interface as the target item, clicks a "Set" button corresponding to the target item, and triggers the first terminal to display a transaction condition setting interface corresponding to the target item. The anchor user sets the allowable transaction condition of the target item in the transaction condition setting interface. After the anchor user completes the setting, the first terminal acquires the allowable transaction condition of the target item set by the anchor user.

In some embodiments, after displaying the item setting interface of the anchor account, in addition to acquiring the allowable transaction condition of the target item, the first terminal also acquires a transaction parameter of the target item in response to an operation of setting the transaction parameter of the target item. The transaction parameter includes a first price of the target item corresponding to the first audience account, the first price is less than or equal to a second price of the target item corresponding to a second audience account, and the second audience account does not meet the allowable transaction condition. Since the target item is a welfare product that the anchor user wants to provide for a specific audience user, the anchor user sets a price not greater than a normal selling price, such that the first audience user can enjoy the welfare price.

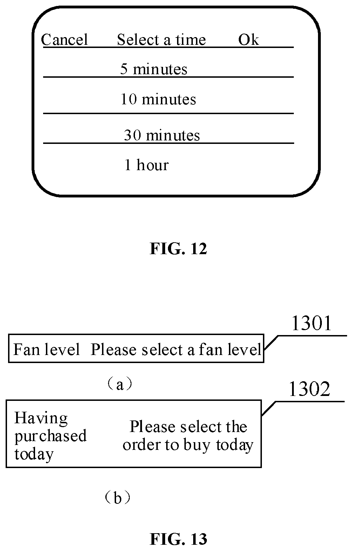

FIG. 11 is a schematic diagram of an item condition setting interface according to an exemplary embodiment. The transaction condition setting interface 1100 includes a transaction parameter setting area 1101, a transaction condition setting area 1102 and a "Save" button 1103. A quantity and price are set in the transaction parameter setting area. A quantity in stock and original price are entered by default, but the anchor user can enter the desired quantity and price. The transaction condition setting area provides a variety of options for allowable transaction conditions, and the anchor user selects one option from these options. If the option selected by the anchor user has a corresponding sub-option, the first terminal displays the sub-option. As shown in FIG. 11, in a case that the allowable transaction condition selected by the anchor user is a watching duration, the first terminal provides a setting entry 1104 for the watching duration. After the anchor user clicks the setting entry 1104, the first terminal provides sub-options of the watching duration for the anchor user to select. FIG. 12 is a schematic diagram of a sub-option according to an exemplary embodiment. The sub-options corresponding to the watching duration include 5 minutes, 10 minutes, 30 minutes, 1 hour, etc. FIG. 13 is a schematic diagram of a sub-option according to an exemplary embodiment. As shown in (a) in FIG. 13, in a case that the allowable transaction condition selected by the anchor user is being a fan, the first terminal provides a corresponding setting entry 1301. After the anchor user clicks the setting entry 1301, the first terminal provides sub-options of fan levels for the anchor user to select. The corresponding sub-options are fan levels such as level 1 and above, level 3 and above, and level 5 and above. As shown in (b) in FIG. 13, in a case that the allowable transaction condition selected by the anchor user is that "today purchased", the first terminal provides a corresponding setting entry 1302. After the anchor user clicks the setting entry 1302, the first terminal provides corresponding sub-options for the anchor user to select. For example, the corresponding sub-options include 1 order, 3 orders, 5 orders and other orders purchased today.

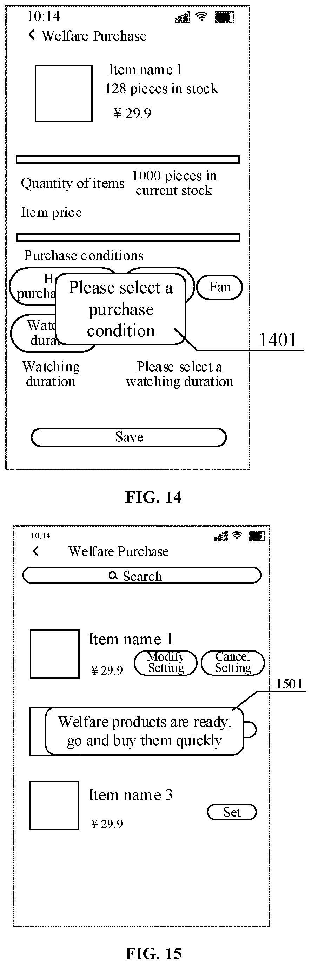

When the anchor user sets transaction conditions in the transaction condition setting interface of the target item, in a case that the anchor user operates wrongly, the first terminal displays corresponding error prompt information to help the anchor user successfully complete the setting. FIG. 14 is a schematic diagram of an item condition setting interface according to an exemplary embodiment. In a case that the anchor user has not finished a complete input, for example, a condition has not been selected on the transaction setting interface but the anchor user directly clicks the "Save" button, the first terminal displays error prompt message 1401 on the transaction setting interface. In some embodiments, in a case that the anchor user has not finished a correct input, including input failure or incomplete input, the first terminal displays the "Save" button as being in an inoperable state and displays the "Save" button as being in an operable state until the input is correct. By clicking this button, the anchor user confirms his/her own settings and triggers the first terminal to save information set by the user. FIG. 14 is just an example of an error prompt. In a case that the anchor user has other wrong operations during the setting process, for example, an input quantity exceeds the quantity in stock, the first terminal directly modifies the quantity input by the user to a quantity in stock, and for another example, an input price exceeds the original price, the first terminal directly modifies the price input by the user as an original price, which will not be exemplified here.

For a case that the target item is an item in a set state in the item setting interface, that the allowable transaction condition of the target item is acquired by the first terminal in response to the operation of setting the transaction condition for the target item includes: an allowable transaction condition for a modified target item is acquired in response to an operation of modifying the transaction condition for the target item.

The anchor user clicks a "Modify Setting" button corresponding to the target item in the item setting interface, and triggers the first terminal to display a transaction condition setting interface corresponding to the target item. The anchor user modifies the allowable transaction condition of the target item in the transaction condition setting interface. The specific operation is the same as that of the setting process of the allowable transaction condition of the target item above, which is not be repeated here. Regardless of whether an item has been set with the allowable transaction condition, the anchor user can perform an operation of setting the transaction condition or an operation of modifying the transaction condition for this item to acquire the allowable transaction condition of this item, which improves the flexibility of item setting.

After the host user has set the allowable transaction condition and transaction parameters for the target item on the transaction condition setting interface, the first terminal jumps from the transaction condition setting interface to the item setting interface. In the item setting interface, it is displayed that the target item is in a set state, and setting success prompt information is displayed to remind the anchor user that the item is ready and can be transacted. FIG. 15 is a schematic diagram of an item setting interface according to an exemplary embodiment. A "Modify Setting" button and a "Cancel Setting" button are correspondingly displayed for a first item in the item setting interface, which indicate that the item has been set with the allowable transaction condition, or setting success prompt information 1501 is also displayed on the item setting interface.

In S503, the first terminal displays item information of the target item and a corresponding setting indicator in the item selection interface of the anchor account, the setting indicator is configured to indicate that the allowable transaction condition has been set, and the item selection interface is configured to select an item to be transacted during the live-streaming process of the anchor account.

After seeing the setting success prompt information displayed in FIG. 15, the anchor user operates on the first terminal to trigger the first terminal to display the item selection interface of the anchor account. In some embodiments, the first terminal can also automatically jump to the item selection interface of the anchor account.

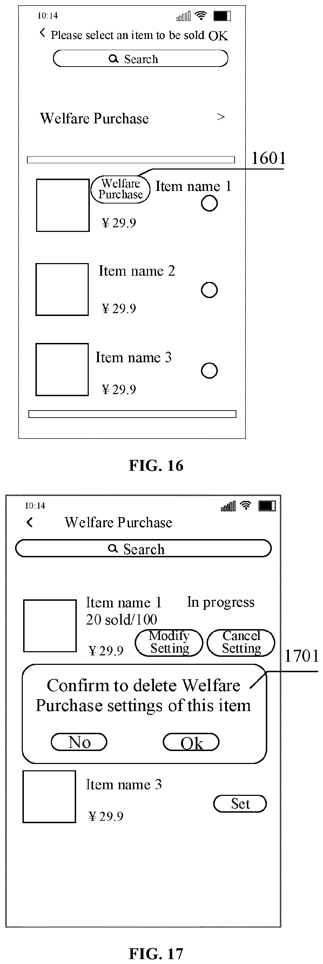

FIG. 16 is a schematic diagram of an item selection page according to an exemplary embodiment. As shown in FIG. 16, the item selection interface is a "Select Item to be Sold" interface. The first terminal displays a name, picture and corresponding setting indicator 1601 of the target item in the item selection interface, and the setting indicator 1601 is "Welfare Purchase".

In S504, the first terminal sends an item issuing request to a server in response to a selection operation for the target item based on item information, and the item issuing request is configured to instruct a server to issue the target item to a live-streaming room of an anchor account and to open a transaction authority of the target item to a first audience account.

The anchor user selects a target item in the item selection interface, for example, selects a first item in the interface shown in FIG. 16, and then clicks an OK button in the upper right corner to trigger the first terminal to send the item issuing request to the server. Alternatively, the item issuing request is referred as a request for putting an item on shelves.

S503 and S504 provide the anchor user with the item for which the transaction condition has been set on an interface where the transaction is selected to start, and the anchor user actively triggers the issuance of the item, which improves the accuracy of the item issuance. In some embodiments, after acquiring the allowable transaction condition of the item, the first terminal can also automatically trigger the issuance of the item, and directly execute the step of sending the item issuing request to the server.

In S505, the server receives the item issuing request, issues the target item to the live-streaming room of the anchor account, and opens the transaction authority of the target item to the first audience account.

In some embodiments, that the target item is issued by the server to the live-streaming room of the anchor account includes: issuing information of the target item is sent to a plurality of user accounts in the live-streaming room, the issuing information includes a setting indicator corresponding to the target item, and the setting indicator is configured to indicate that an allowable transaction condition has been set. By issuing the item to all the audience accounts in the live-streaming room, a plurality of audience users can know that the anchor user has opened the transaction of this item, which improves the audience's sense of participation. The plurality of audience users are all audience users or some audience users in the live-streaming room.

In addition to the setting indicator, the issuing information includes item information such as a picture and name of the target item, transaction parameters such as a price and quantity of the target item, and the allowable transaction condition of the target item.

In some embodiments, that the target item is issued by the server to the live-streaming room of the anchor account includes: a target user account is determined in the live-streaming room by the server based on a type of the allowable transaction condition of the target item; and the issuing information of the target item is sent to the target user account, the issuing information includes the setting indicator corresponding to the target item, and the setting indicator is configured to indicate that the allowable transaction condition has been set. By selectively issuing an item to the target audience in the live-streaming room based on the type of the allowable transaction condition, the pertinence of item issuance can be improved.

In some embodiments, that the target user account is determined in the live-streaming room by the server based on the type of the allowable transaction condition includes any of the followings: the target user account is determined by the server in a case that the type of the allowable transaction condition is a target type, the target user account is a plurality of user accounts in the live-streaming room, and the target type refers to a condition that a probability of meeting the allowable transaction condition within a target duration is greater than a probability threshold; and in a case that the type of the allowable transaction condition is not the target type, the target user account is determined by the server, the target user account is an account that meets the allowable transaction condition at the current time. By targeting conditions with high thresholds, an item is only issued to qualified audience users, thereby avoiding unnecessary waste of resources.

The target type refers to a condition that can be achieved within a short term. In a case that the server determines that the allowable transaction condition of the target item is a condition that can be achieved within the short term, such as a watching duration, becoming a fan, etc., the server sends the issuing information of the target item to a plurality of audience accounts in the live-streaming room. In a case that the server determines that the allowable transaction condition of the target item is a condition that can be not achieved within a short term, such as a fan group, a person who has purchased an item or a new customer, the server sends the issuing information of the target item only to the first audience account in the live-streaming room.

In some embodiments, that the transaction authority of the target item is opened by the server to the first audience account includes: account information of audience accounts in the live-streaming room is determined by the server; authority opening information is sent to each audience account in a case that the account information of the audience account meets the allowable transaction condition of the target item, and the authority opening information is configured to indicate that the audience account meets the allowable transaction condition of the target item and the transaction authority of the target item has been opened to the audience account. When it is detected that the audience account meets the allowable transaction condition of the item, the transaction authority of the item is opened to the audience account, such that the second terminal can correctly display the corresponding interface for the audience user to transact the item, thereby improving the accuracy of the item transaction.

Based on the allowable transaction condition of the target item, the server detects in real time the account information, that is related to this transaction permitting condition, of the audience accounts in the live-streaming room, and determines whether the allowable transaction condition is met. In a case that the audience account meets the allowable transaction condition, the server issues the transaction authority of the target item to the audience account. In a case that the audience account does not meet the allowable transaction condition, the server waits until the audience account meets the allowable transaction condition, and then issues the transaction authority of the target item to the audience account.

In some embodiments, after the first terminal sends the item issuing request to the server, the method for processing the network data further includes: modified setting information of the target item is acquired in response to a setting modifying operation for the target item. The setting modifying operation includes at least one of an operation of modifying the transaction parameter or an operation of modifying the transaction condition. Accordingly, the setting information includes at least one of transaction parameters or the allowable transaction conditions. By providing the setting modifying function, the anchor can modify the setting information of the target item at any time during the live-streaming process, thereby improving the flexibility.

In some embodiments, after the first terminal issues the item issuing request to the server, the method for processing the network data further includes: a transaction closing request is sent to the server in response to a setting cancellation operation for the target item, and the transaction closing request is configured to instruct the server to delete issuing information of the target item in the live-streaming room and close a transaction authority of the target item.

That the server issues the item to the live-streaming room means the item is put on shelves; and correspondingly, that the server deletes the issuing information of the item in the live-streaming room means the item is pulled off the shelves, such that the users in the live-streaming room cannot perform the transaction of this item. By providing the setting cancellation function, the anchor user can freely stop the transaction of the item that has already started the transaction, which increases the flexibility of item transaction.

FIG. 17 is a schematic diagram of an item setting interface according to an exemplary embodiment. The anchor user clicks a "Cancel Setting" button corresponding to the target item on the item setting interface, and the first terminal displays prompt information 1701 on the item setting interface to prompt the anchor user whether to confirm the deletion of the setting. For example, the prompt information 1701 is "Confirm to delete welfare purchase setting of this product", and a "No" button and a "Ok" button are provided. When the host user clicks the "Ok" button, the first terminal executes the step of sending the transaction closing request to the server.

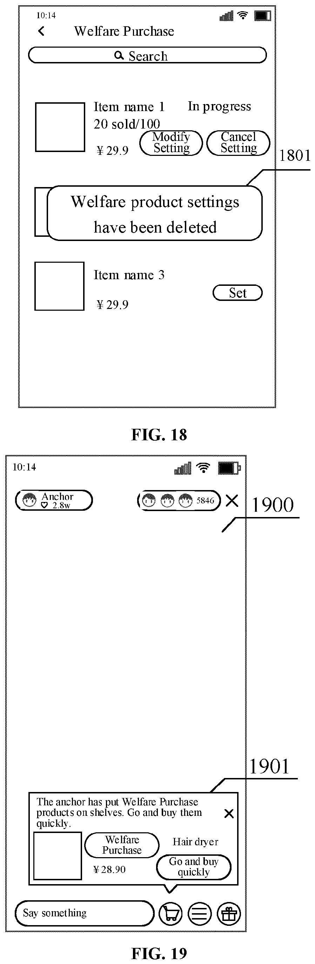

FIG. 18 is a schematic diagram of an item setting interface according to an exemplary embodiment. After the first terminal sends the transaction closing request to the server, setting success deletion information 1801 is displayed on the item setting interface, and the setting success deleting information 1801 is "Welfare product settings have been deleted". Then, the first terminal displays the target item in the item setting interface as being in an unset state, e.g., a "Set" button corresponding to the target item is displayed.

In S506, the second terminal displays the live-streaming room interface of the anchor account, the live-streaming room interface includes a transaction entry of the target item for which the allowable transaction condition has been set, and the allowable transaction condition is configured to indicate a condition that an audience account needs to meet when performing item transaction processing.

The second terminal is logged with an account different from the anchor account, and the logged-in user account of the second terminal is also an audience account.

After the server issues the target item to the live-streaming room of the anchor account, the second terminal displays the transaction entry of the target item on the live-streaming room interface of the anchor account. In some embodiments, a setting indicator corresponding to the target item is displayed on the transaction entry, the setting indicator is configured to indicate that the allowable transaction condition has been set. Prior to displaying the live-streaming room interface of the anchor account, the second terminal receives issuing information of the target item which includes the setting indicator corresponding to the target item. After receiving the issuing information of the target item, the second terminal displays the transaction entry of the target item on the live-streaming room interface based on the issuing information of the target item. Since the setting indicator is displayed on the transaction entry, the audience user in the live-streaming room knows that this item is welfare provided by the anchor user, which increases the possibility of the audience participating in the item transaction.

FIG. 19 is a schematic diagram of a live-streaming room interface according to an exemplary embodiment. A transaction entry 1901 for the target item is displayed on the live-streaming room interface 1900. In addition to the setting indicator (e.g., "Welfare Purchase" in FIG. 19), the transaction entry also includes item information such as a picture and name of the target item, transaction parameters such as a price, and prompt information such as "The anchor has put Welfare Purchase products on shelves, go and buy them quickly".

In S507, the second terminal acquires account information of a logged-in user account in response to a triggering operation on the transaction entry.

The audience user clicks the transaction entry displayed on the live-streaming room interface, and after detecting this operation, the second terminal acquires account information of the currently logged-in user account. In some embodiments, the account information includes all account information of the logged-in user accounts, or only includes account information related to the allowable transaction condition and transaction authority of the target item, such that the second terminal can determine, based on the account information, whether the logged-in user account is a first audience account that has met the allowable transaction condition of the target item and acquired the transaction authority.

In a case that the logged-in user account is determined as the first audience account, S508 is performed; and in a case that the logged-in user account is not determined as the first audience account, S509 to S511 are performed.

In S508, the second terminal displays a transaction editing page of the target item in a case that the logged-in user account is determined as the first audience account based on the account information, the first audience account is an audience account that has met the allowable transaction condition of the target item and acquired the transaction authority of the target item.

Alternatively, the transaction editing page is referred to as an order placement page. The second terminal displays this transaction editing page in a part of the live-streaming room interface.

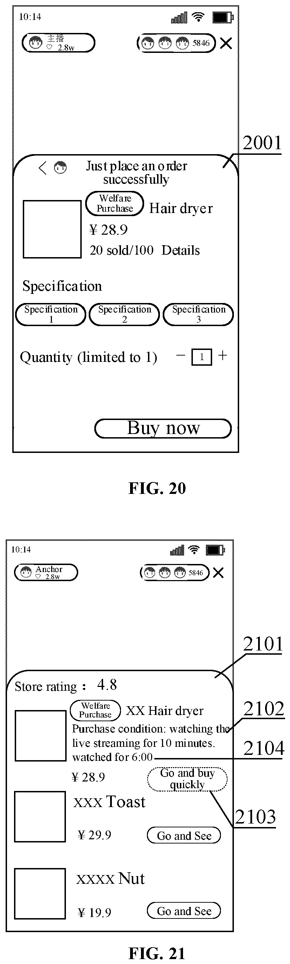

FIG. 20 is a schematic diagram of a live-streaming room interface according to an exemplary embodiment. The second terminal displays the transaction editing page 2001 in a lower half of the live-streaming room interface. The audience user selects a specification, quantity, etc. of the item on the transaction editing page 2001. If each user is limited to a target quantity of purchase, such as 1 item, the quantity is selected as 1 by default. After completing editing on the transaction editing page, the audience user clicks a "Buy Now" button in FIG. 20 to trigger the second terminal to display an order submitting page. The audience user enters order information such as an address and telephone number on the order submitting page, and then submits the order.

In S509, the second terminal displays an item list of the anchor account in a case that the logged-in user account is determined not to be the first audience account based on the account information, the item list includes the allowable transaction condition of the target item and a corresponding transaction button, and the transaction button is in an inoperable state.

The item list includes a plurality of items including the target item, and the target item is correspondingly displayed with an allowable transaction condition and a transaction button. Since the logged-in user account currently does not meet the allowable transaction condition of the target item or fails to acquire the transaction authority of the target item, the second terminal displays the transaction button corresponding to the target item as being in an inoperable state.

FIG. 21 is a schematic diagram of a live-streaming room interface according to an exemplary embodiment. The second terminal displays an item list 2101 of the anchor account in the lower half of the live-streaming room interface. The item for which the allowable transaction condition has been set is correspondingly displayed with an allowable transaction condition 2102 and a transaction button 2103. The transaction button displays text information of "Go and Buy Quickly", and the transaction button is displayed as being in an inoperable state (indicated by a dotted line). The audience user clicks any item in FIG. 21 to jump to a detail page of this item in order to view detailed information of this item.

In S510, the second terminal receives authority opening information of the target item and modifies a state of the transaction button as an operable state, and the authority opening information is configured to indicate that the logged-in user account meets the allowable transaction condition of the target item and the transaction authority of the target item has been opened to the logged-in user account.

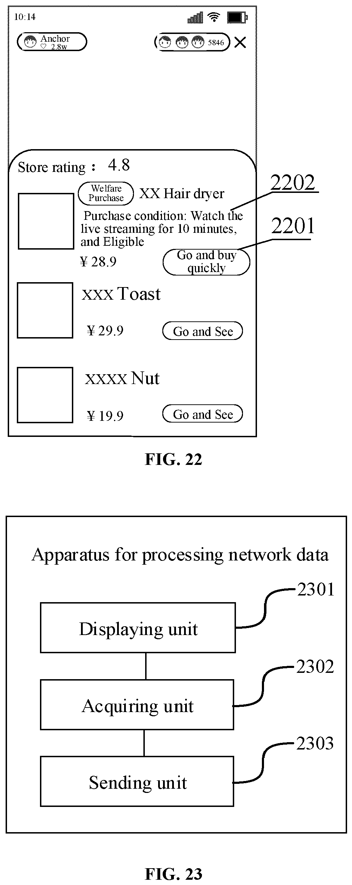

In a case that the second terminal receives the authority opening information sent by the server, the second terminal determines that the logged-in user account has met the allowable transaction condition of the target item and acquired the transaction permitting authority of the target item, and the second terminal displays the transaction button corresponding to the target item as being in an operable state at this time. FIG. 22 is a schematic diagram of a live-streaming room interface according to an exemplary embodiment. The second terminal displays the transaction button 2201 corresponding to the item as being in an operable state (indicated by a solid line).

In some embodiments, the item list also includes current condition information of the logged-in user account corresponding to the allowable transaction condition of the target item. The second terminal displays the current condition information of the logged-in user account based on the allowable transaction condition of the target item. As shown in information 2104 in FIG. 21, in a case that the allowable transaction condition is watching the live streaming for 10 minutes, the current condition information of the logged-in user account is that the live streaming has been watched for 6 minutes.

After the second terminal receives the authority opening information of the target item, the method for processing the network data further includes: the current condition information of the logged-in user account is updated as target information by the second terminal, the target information is configured to indicate that the allowable transaction condition of the target item has been met. The second terminal updates the current condition information when the logged-in user account has watched the live-streaming for 10 minutes. As shown in information 2202 in FIG. 22, the second terminal updates the current condition information as being "Eligible". By displaying the current condition information of the logged-in user account while displaying the allowable transaction condition of the target item, the audience users can be inspired to take corresponding actions to meet the allowable transaction condition of the target item. When the condition is met, the information is updated in time, such that the audience users can transact items in time.

In S511, the second terminal displays a transaction editing page for the target item in response to a triggering operation on the transaction button.

In a case that the audience user clicks the transaction button corresponding to the target item, the second terminal displays the transaction editing page for the target item in response to detecting a triggering operation on the transaction button. The transaction editing page has been introduced in the previous steps, and will not be repeated here.

From S509 to S511, when it is determined that the account does not currently meet the allowable transaction condition of the item and fails to acquire the transaction authority, the transaction button is first displayed as being in an inoperable state; and when the account meets the allowable transaction condition and acquires the transaction authority, the state of the transaction button is updated as an operable state, such that the audience user triggers the transaction button in time to enter the order placement page to complete item transaction, thereby improving the flexibility of the item transaction and helping the anchor increase the item transaction volume in the live-streaming room.

According to the above technical solution, the anchor is provided with a targeted sales capability so as to support the anchor to increase purchase conditions for welfare items in the live-streaming room, and only audiences who meet the condition set by the anchor can purchase corresponding items and enjoy benefits, thereby providing the anchor with a gameplay tool having the functions of performing popular operation in the live-streaming room, maintaining old customers, and promoting the conversion of new customers. For anchors who consciously pay a certain cost to drive the popularity of the live-streaming room, give back to specific audience groups, and at the same time hope to improve the input-output ratio, by setting the "Welfare Purchase" gameplay in the live-streaming room provided by the above technical solutions, the anchor's subjective initiative can be brought into play in a live-streaming room scenario to increase the interaction between the anchor and the audiences, which can enhance the shopping atmosphere of the live-streaming room and help the anchor effectively increase the popularity of the live-streaming room, thereby meeting the needs of the anchor to provide welfare items to specific audiences.

According to the method provided by this embodiment of the present disclosure, by displaying an item setting interface for the anchor account, the anchor user can set the condition that the audience user needs to meet when performing item transaction processing, and then the first terminal requests the server to issue the item for which the condition has been set to the live-streaming room, and open the transaction authority of the item to the audience user who meets the condition. In this way, the audience user who meet the condition can transact items on his/her own and enjoy benefits. A new way of providing welfare items is provided in the live-streaming room, which improves the convenience of providing welfare items and well meets the needs of the anchor user to provide welfare items to specific audience users.

FIG. 23 is a block diagram of an apparatus for processing network data according to an exemplary embodiment. Referring to FIG. 23, the apparatus for processing the network data includes:
a displaying unit 2301 configured to display an item setting interface of an anchor account, wherein the item setting interface is configured to set an allowable transaction condition of an item, and the allowable transaction condition is configured to indicate a condition that an audience account needs to meet when performing item transaction processing;
an acquiring unit 2302 configured to acquire an allowable transaction condition of a target item in response to an operation of setting a transaction condition for the target item, wherein the target item is any item in the item setting interface; and
a sending unit 2303 configured to sending an item issuing request to a server, wherein the item issuing request is configured to instruct the server to issue the target item to a live-streaming room of the anchor account and to open a transaction authority of the target item to a first audience account, and the first audience account meets the allowable transaction condition of the target item.

In some embodiments, the displaying unit 2301 is further configured to display item information of the target item and a corresponding setting indicator in an item selection interface of the anchor account, wherein the setting indicator is configured to indicate that the allowable transaction condition has been set, and the item selection interface is configured to select an item to be transacted during a live-streaming process of the anchor account; and
the sending unit 2303 is further configured to perform a step of sending the item issuing request to the server in response to a selection operation for the target item based on the item information.

In some embodiments, the displaying unit 2301 is configured to display a plurality of items in the item setting interface, wherein the plurality of items include items in an unset state, and the unset state is configured to indicate that the allowable transaction condition has not been set.

In some embodiments, the displaying unit 2301 is configured to display a plurality of items in the item setting interface, wherein the plurality of items include items in a set state, and the set state is configured to indicate that the allowable transaction condition has been set; and
the acquiring unit 2302 is configured to acquire a modified allowable transaction condition for the target item in response to an operation of modifying the transaction condition for the target item.

In some embodiments, the acquiring unit 2302 is further configured to acquire a transaction parameter of the target item in response to an operation of setting the transaction parameter of the target item, wherein the transaction parameter includes a first price of the target item corresponding to the first audience account, the first price is less than or equal to a second price of the target item corresponding to a second audience account, and the second audience account does not meet the allowable transaction condition.

In some embodiments, the sending unit 2303 is further configured to send a transaction closing request to the server in response to a setting cancellation operation for the target item, wherein the transaction closing request is configured to instruct the server to delete issuing information of the target item in the live-streaming room, and close a transaction authority of the target item.

In this embodiment of the present disclosure, by displaying an item setting interface for the anchor account, the anchor user can set the condition that the audience user needs to meet when performing item transaction processing, then request the server to issue the item for which the condition has been set to the live-streaming room, and open the transaction authority of the item to the audience user who meets the condition. In this way, the audience user who meet the condition can transact items on his/her own and enjoy benefits. A new way of providing welfare items is provided in the live-streaming room, which improves the convenience of providing welfare items and well meets the needs of the anchor user to provide welfare items to specific audience users.

With respect to the apparatus in the foregoing embodiment, the specific manner in which each module performs the operation has been described in detail in the embodiment of the method, and a detailed description will not be given here.

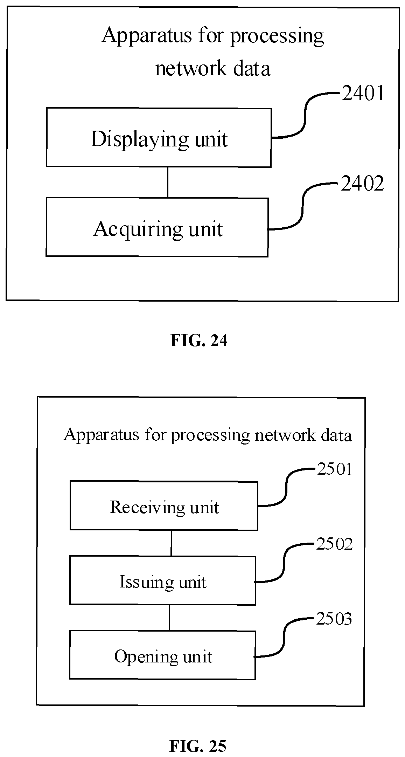

FIG. 24 is a block diagram of an apparatus for processing network data according to an exemplary embodiment. Referring to FIG. 24, the apparatus for processing the network data includes:
a displaying unit 2401 configured to display a live-streaming room interface of an anchor account, wherein the live-streaming room interface includes a transaction entry of a target item and an allowable transaction condition has been set for the target item, and the allowable transaction condition is configured to indicate a condition that an audience account needs to meet when performing item transaction processing; and
an acquiring unit 2402 configured to acquire account information of a logged-in user account in response to a triggering operation on the transaction entry, wherein
the displaying unit 2401 is further configured to display a transaction editing page of the target item in a case that the logged-in user account is determined as a first audience account based on the account information, wherein the first audience account meets the allowable transaction condition of the target item.

In some embodiments, a setting indicator corresponding to the target item is displayed on the transaction entry, wherein the setting indicator is configured to indicate that the allowable transaction condition has been set; and
the apparatus for processing the network data further includes:
a first receiving unit configured to receive issuing information of the target item, wherein the issuing information includes the setting indicator corresponding to the target item.

In some embodiments, the apparatus further includes:
the displaying unit 2401 is further configured to display an item list of the anchor account in a case that the logged-in user account is determined not to be the first audience account based on the account information, wherein the item list includes the allowable transaction condition of the target item and a corresponding transaction button, and a state of the transaction button is an inoperable state;
a second receiving unit configured to receive authority opening information of the target item, wherein the authority opening information is configured to indicate that the logged-in user account meets the allowable transaction condition of the target item and the transaction authority of the target item has been opened to the logged-in user account; and
a modifying unit configured to modify a state of the transaction button as an operable state, wherein
the displaying unit 2401 is further configured to display a transaction editing page of the target item in response to a triggering operation on the transaction button.

In some embodiments, the item list also includes current condition information of the logged-in user account corresponding to the allowable transaction condition of the target item; and
the apparatus for processing the network data further includes:
an updating unit configured to update the current condition information of the logged-in user account as target information, wherein the target information is configured to indicate that the allowable transaction condition of the target item has been met.

In this embodiment, by displaying the transaction entry for the item in the live-streaming room, the terminal displays the transaction editing page of the item for the user to edit an order when the transaction entry is triggered in the case that the logged-in user account has met the allowable transaction condition of the item and acquired the transaction authority. In this way, the anchor user only needs to set the allowable transaction condition of the item and issue the item to the live-streaming room, and then the audience user who meets the condition can transact items on his/her own and enjoy benefits. A new way of providing welfare items is provided in the live-streaming room, which improves the convenience of providing welfare items and well meets the needs of the anchor user to provide welfare items to specific audience users.

With respect to the apparatus in the foregoing embodiment, the specific manner in which each module performs the operation has been described in detail in the embodiment of the method, and a detailed description will not be given here.

FIG. 25 is a block diagram of an apparatus for processing network data according to an exemplary embodiment. Referring to FIG. 25, the apparatus for processing the network data includes:
a receiving unit 2501 configured to receive an item issuing request, wherein the item issuing request is configured to instruct to issue the target item to a live-streaming room of an anchor account and to open a transaction authority of the target item to a first audience account, the first audience account meets an allowable transaction condition of the target item, and the allowable transaction condition is configured to indicate a condition that the audience account needs to meet when performing item transaction processing;
an issuing unit 2502 configured to issue the target item to the live-streaming room of the anchor account; and
an opening unit 2503 configured to open the transaction authority of the target item to the first audience account.

In some embodiments, the issuing unit 2502 is configured to send the issuing information of the target item to a plurality of user accounts in the live-streaming room, wherein the issuing information includes a setting indicator corresponding to the target item, and the setting indicator is configured to indicate that the allowable transaction condition has been set.

In some embodiments, the issuing unit 2502 is further configured to:
determine a target user account in the live-streaming room based on a type of the allowable transaction condition of the target item; and
send the issuing information of the target item to the target user account, wherein the issuing information includes the setting indicator corresponding to the target item, and the setting indicator is configured to indicate that the allowable transaction condition has been set.

In some embodiments, the issuing unit 2502 is configured to perform any of the followings:
determining the target user account in the case that the type of the allowable transaction condition is a target type, wherein the target user account is a plurality of user accounts in the live-streaming room, and the target type refers to a condition that a probability of meetingthe allowable transaction condition within a target duration is greater than a probability threshold; and
determining the target user account in a case that the type of the allowable transaction condition is not the target type, wherein the target user account is an account that meets the allowable transaction condition at the current time.

In some embodiments, the opening unit 2503 is configured to:
determine account information of audience accounts in the live-streaming room; and
send authority opening information to the audience account in a case that the account information of the audience account meets the allowable transaction condition of the target item, wherein the authority opening information is configured to indicate that the audience account meets the allowable transaction condition of the target item and the transaction authority of the target item has been opened to the audience account.

In this embodiment of the present disclosure, after the item issuing request from the anchor user is received, the item for which the allowable transaction condition has been set is issued to the live-streaming room, and the transaction authority of the item is opened to the audience user who meets the condition. In this way, the audience user who meets the condition can transact items on his/her own and enjoy benefits. A new way of providing welfare items is provided in the live-streaming room, which improves the convenience of providing welfare items and well meets the needs of the anchor user to provide welfare items to specific audience users.

With respect to the apparatus in the foregoing embodiment, the specific manner in which each module performs the operation has been described in detail in the embodiment of the method, and a detailed description will not be given here.

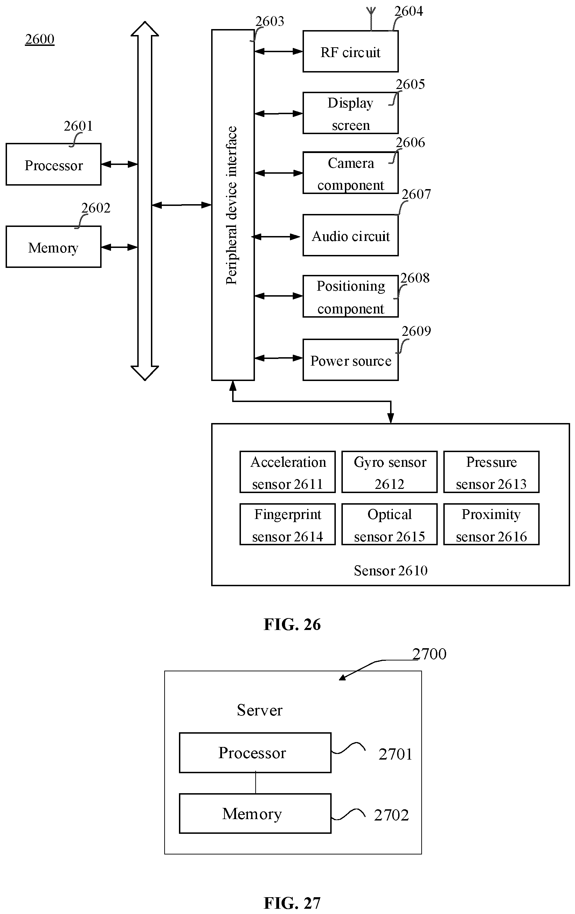

FIG. 26 is a block diagram of a terminal according to an exemplary embodiment. The terminal 2600 may be a smart phone, a tablet computer, a moving picture experts group audio layer III (MP3) player, a moving picture experts group audio layer IV (MP4) player, a laptop or desk computer. The terminal 2600 may also be called a UE (User Equipment), a portable terminal, a laptop terminal, a desk terminal, etc.

Generally, the terminal 2600 includes one or more processors 2601 and one or more memories 2602.

The processor 2601 may include one or more processing cores, such as a 4-core processor and an 8-core processor. The processor 2601 may be implemented by at least one hardware of a digital signal processing (DSP), a field-programmable gate array (FPGA), and a programmable logic array (PLA). The processor 2601 may also include a main processor and a coprocessor. The main processor is a processor configured to process the data in an awake state, and is also called a central processing unit (CPU). The coprocessor is a low-power-consumption processor configured to process the data in a standby state. In some embodiments, the processor 2601 may be integrated with a graphics processing unit (GPU), which is configured to render and draw the content that needs to be displayed by a display screen. In some embodiments, the processor 2601 may also include an artificial intelligence (AI) processor configured to process computational operations related to machine learning.

The memory 2602 may include one or more computer-readable storage mediums, which can be non-transitory. The memory 2602 may also include a high-speed random access memory, as well as a non-volatile memory, such as one or more disk storage devices and flash storage devices. In some embodiments, a non-transitory computer-readable storage medium in the memory 2602 is configured to store at least one program code, which is executed by the processor 2601 to implement the method for processing network data according to the method embodiment of the present disclosure.

In some embodiments, the terminal 2600 also optionally includes a peripheral device interface 2603 and at least one peripheral device. The processor 2601, the memory 2602, and the peripheral device interface 2603 may be connected by a bus or a signal line. Each peripheral device may be connected to the peripheral device interface 2603 by a bus, a signal line or a circuit board. Specifically, the peripheral device includes at least one of a radio frequency circuit 2604, a display screen 2605, a camera 2606, an audio circuit 2607, a positioning component 2608 and a power source 2609.

The peripheral device interface 2603 may be configured to connect at least one peripheral device associated with an input/output (I/O) to the processor 2601 and the memory 2602. In some embodiments, the processor 2601, the memory 2602 and the peripheral device interface 2603 are integrated on the same chip or circuit board. In some other embodiments, any one or two of the processor 2601, the memory 2602 and the peripheral device interface 2603 may be implemented on a separate chip or circuit board, which is not limited in the present embodiment.

The radio frequency circuit 2604 is configured to receive and transmit a radio frequency (RF) signal, which is also referred to as an electromagnetic signal. The radio frequency circuit 2604 communicates with a communication network and other communication devices via the electromagnetic signal. The radio frequency circuit 2604 converts the electrical signal into the electromagnetic signal for transmission, or converts the received electromagnetic signal into the electrical signal. In some embodiments, the RF circuit 2604 includes an antenna system, an RF transceiver, one or more amplifiers, a tuner, an oscillator, a digital signal processor, a codec chipset, a subscriber identity module card, and the like. The RF circuit 2604 can communicate with other terminals via at least one wireless communication protocol. The wireless communication protocol includes, but not limited to, a metropolitan area network, various generations of mobile communication networks (2G, 3G, 4G, and 5G), a wireless local area network, and a wireless fidelity (WiFi) network. In some embodiments, the RF circuit 2604 may also include near field communication (NFC) related circuits, which is not limited in the present disclosure.

The display screen 2605 is configured to display a user interface (UI). The UI may include graphics, text, icons, videos, and any combination thereof. When the display screen 2605 is a display screen, the display screen 2605 also has the capacity to acquire touch signals on or over the surface of the display screen 2605. The touch signal may be input into the processor 2601 as a control signal for processing. At this time, the display screen 2605 may also be configured to provide virtual buttons and/or virtual keyboards, which are also referred to as soft buttons and/or soft keyboards. In some embodiments, one display screen 2605 may be disposed on the front panel of the terminal 2600. In some other embodiments, at least two display screens 2605 may be disposed respectively on different surfaces of the terminal 2600 or in a folded design. In further embodiments, the display screen 2605 may be a flexible display screen disposed on the curved or folded surface of the terminal 2600. Even the display screen 2605 may have an irregular shape other than a rectangle. That is, the display screen 2605 may be an irregular-shaped screen. The display screen 2605 may be prepared from a material such as a liquid crystal display (LCD), an organic light-emitting diode (OLED), etc.

The camera component 2606 is configured to capture images or videos. In some embodiments, the camera component 2606 includes a front camera and a rear camera. Usually, the front camera is placed on the front panel of the terminal, and the rear camera is placed on the back of the terminal. In some embodiments, at least two rear cameras are disposed, and are at least one of a main camera, a depth-of-field camera, a wide-angle camera, and a telephoto camera respectively, so as to realize a background blurring function achieved by fusion of the main camera and the depth-of-field camera, panoramic shooting and virtual reality (VR) shooting functions achieved by fusion of the main camera and the wide-angle camera or other fusion shooting functions. In some embodiments, the camera component 2606 may also include a flashlight. The flashlight may be a mono-color temperature flashlight or a two-color temperature flashlight. The two-color temperature flash is a combination of a warm flashlight and a cold flashlight and can be used for light compensation at different color temperatures.

The audio circuit 2607 may include a microphone and a speaker. The microphone is configured to collect sound waves of users and environments, and convert the sound waves into electrical signals which are input into the processor 2601 for processing, or input into the RF circuit 2604 for voice communication. For the purpose of stereo acquisition or noise reduction, there may be a plurality of microphones respectively disposed at different locations of the terminal 2600. Alternatively, the microphone may also be an array microphone or an omnidirectional acquisition microphone. The speaker is then configured to convert the electrical signals from the processor 2601 or the RF circuit 2604 into the sound waves. The speaker may be a conventional film speaker or a piezoelectric ceramic speaker. When the speaker is the piezoelectric ceramic speaker, the electrical signal can be converted into not only human-audible sound waves but also the sound waves which are inaudible to humans for the purpose of ranging and the like. In some embodiments, the audio circuit 2607 may also include a headphone jack.

The positioning component 2608 is configured to locate the current geographic location of the terminal 2600 to implement navigation or location-based service (LBS). The positioning component 2608 may be a positioning component based on the American global positioning system (GPS), the Chinese Beidou system, the Grenas system in Russia or the Russian Galileo system.

The power source 2609 is configured to power up various components in the terminal 2600. The power source 2609 may be alternating current, direct current, a disposable battery, or a rechargeable battery. When the power source 2609 includes the rechargeable battery, the rechargeable battery may a wired rechargeable battery or a wireless rechargeable battery. In some embodiments, the rechargeable battery may also support the fast-charging technology.

In some embodiments, the terminal 2600 also includes one or more sensors 2610. The one or more sensors 2610 include, but not limited to, an acceleration sensor 2611, a gyro sensor 2612, a pressure sensor 2613, a fingerprint sensor 2614, an optical sensor 2615 and a proximity sensor 2616.

The acceleration sensor 2611 may detect magnitudes of accelerations on three coordinate axes of a coordinate system established by the terminal 2600. For example, the acceleration sensor 2611 may be configured to detect components of a gravitational acceleration on the three coordinate axes. The processor 2601 may control the display screen 2605 to display a user interface in a landscape view or a portrait view according to a gravity acceleration signal collected by the acceleration sensor 2611. The acceleration sensor 2611 may also be configured to collect motion data of a game or a user.

The gyro sensor 2612 can detect a body direction and a rotation angle of the terminal 2600, and can cooperate with the acceleration sensor 2611 to collect a 3D motion of the user on the terminal 2600. Based on the data collected by the gyro sensor 2612, the processor 2601 can serve the following functions: motion sensing (such as changing the UI according to a user's tilt operation), image stabilization during shooting, game control and inertial navigation.

The pressure sensor 2613 may be disposed on a side frame of the terminal 2600 and/or a lower layer of the display screen 2605. When the pressure sensor 2613 is disposed on the side frame of the terminal 2600, a user's holding signal to the terminal 2600 can be detected. The processor 2601 can perform left-right hand recognition or quick operation according to the holding signal collected by the pressure sensor 2613. When the pressure sensor 2613 is disposed on the lower layer of the display screen 2605, the processor 2601 controls an operable control on the UI according to a user's pressure operation on the display screen 2605. The operable control includes at least one of a button control, a scroll bar control, an icon control and a menu control.

The fingerprint sensor 2614 is configured to collect a user's fingerprint. The processor 2601 identifies the user's identity based on the fingerprint collected by the fingerprint sensor 2614, or the fingerprint sensor 2614 identifies the user's identity based on the collected fingerprint. When the user's identity is identified as trusted, the processor 2601 authorizes the user to perform related sensitive operations, such as unlocking the screen, viewing encrypted information, downloading software, paying, and changing settings. The fingerprint sensor 2614 may be provided on the front, back, or side of the terminal 2600. When the terminal 2600 is provided with a physical button or a manufacturer's Logo, the fingerprint sensor 2614 may be integrated with the physical button or the manufacturer's Logo.

The optical sensor 2615 is configured to collect ambient light intensity. In one embodiment, the processor 2601 may control the display brightness of the display screen 2605 according to the ambient light intensity collected by the optical sensor 2615. Specifically, when the ambient light intensity is high, the display brightness of the display screen 2605 is increased; and when the ambient light intensity is low, the display brightness of the display screen 2605 is decreased. In another embodiment, the processor 2601 may also dynamically adjust shooting parameters of the camera component 2606 according to the ambient light intensity collected by the optical sensor 2615.

The proximity sensor 2616, also referred to as a distance sensor, is usually disposed on the front panel of the terminal 2600. The proximity sensor 2616 is configured to capture a distance between the user and a front surface of the terminal 2600. In one embodiment, when the proximity sensor 2616 detects that the distance between the user and the front surface of the terminal 2600 becomes gradually smaller, the processor 2601 controls the display screen 2605 to switch from a screen-on state to a screen-off state. When it is detected that the distance between the user and the front surface of the terminal 2600 gradually increases, the processor 2601 controls the display screen 2605 to switch from the screen-off state to the screen-on state.

It will be understood by those skilled in the art that the structure shown in FIG. 26 does not constitute a limitation to the terminal 2600, and may include more or less components than those illustrated, or combine some components or adopt different component arrangements.

In an exemplary embodiment, a non-volatile computer-readable storage medium is provided. A program code in the computer-readable storage medium, which being executed by a processor of a terminal, enables the terminal to perform the above-mentioned method. Optionally, the non-volatile computer-readable storage medium may be a read-only memory (ROM), a random-access memory (RAM), a compact-disc read-only memory (CD-ROM), a magnetic tape, a floppy disk, an optical data storage device, and the like.

In an exemplary embodiment, a computer program product is further provided. A program code in the computer program product, which being executed by a processor of a terminal, enables the terminal to perform the method for processing the network data.

FIG. 27 is a block diagram of a server according to an exemplary embodiment of the present disclosure. The server 2700 can vary greatly depending on different configurations or performances, and may include one or more central processing units (CPUs) 2701 and one or more memories 2702. The one or more memories 2702 are configured to store at least one program code therein, the at least one program code being loaded and executed by the one or more processors 2701 to implement the methods for processing data-live-streaming data provided by the above method embodiments. Of course, the server may also be provided with a wired or wireless network interface, a keyboard, an input/output interface and other components for input and output. The server may also include other components configured to implement device functions, which is not be described in detail here.

In an exemplary embodiment, a non-volatile computer-readable storage medium is further provided. A program code in the computer-readable storage medium, when being executed by a processor of a server, enables the server to perform the above-mentioned method. Optionally, the non-volatile computer-readable storage medium may be a read-only memory (ROM), a random-access memory (RAM), a compact - disc read-only memory (CD-ROM), a magnetic tape, a floppy disk, an optical data storage device, and the like.

In an exemplary embodiment, a computer program product is further provided. A program code in the computer program product, which being executed by a processor of a server, enables the server to the above-mentioned method for processing the network data.

The user information involved in the present disclosure is information authorized by the user or fully authorized by all parties.

All the embodiments of the present disclosure can be implemented independently or in combination with other embodiments, all of which are all regarded as the protection scope claimed by the present disclosure.

In some embodiments, the allowable transaction condition that the audience account needs to meet include any of the followings:
a duration of the audience account staying in the live-streaming room is greater than or equal to a target duration;
a number of transactions in the live-streaming room with a target time period is greater than or equal to a first number;
the audience account is a fan of the anchor account;
a level of a fan base to which the audience account belongs is greater than or equal to a target level; and
a number of transactions in the live-streaming room is less than a second number.

In some embodiments, the allowable transaction condition that the audience account needs to meet include any of the followings:
a duration of the audience account staying in the live-streaming room is greater than or equal to a target duration;
a number of transactions in the live-streaming room with a target time period is greater than or equal to a first number;
the audience account is a fan of the anchor account;
a level of a fan base to which the audience account belongs is greater than or equal to a target level; and
a number of transactions in the live-streaming room is less than a second number.

## Claims

1. A method for processing network data, comprising:
displaying an item setting interface of an anchor account, wherein the item setting interface is configured to set an allowable transaction condition of an item, and the allowable transaction condition is configured to indicate a condition that an audience account needs to meet when performing item transaction processing;
acquiring an allowable transaction condition of a target item in response to an operation of setting a transaction condition for the target item, wherein the target item is any item in the item setting interface; and
sending an item issuing request to a server, wherein the item issuing request is configured to instruct the server to issue the target item to a live-streaming room of the anchor account and to open a transaction authority of the target item to a first audience account, and the first audience account meets the allowable transaction condition of the target item.

2. The method for processing the network data according to claim 1, further comprising:
displaying item information of the target item and a corresponding setting indicator in an item selection interface of the anchor account, wherein the setting indicator is configured to indicate that the allowable transaction condition has been set, and the item selection interface is configured to select an item to be transacted during a live-streaming process of the anchor account; and
performing a step of sending the item issuing request to the server in response to a selection operation for the target item based on the item information.

3. The method for processing the network data according to claim 1, wherein said displaying the item setting interface of the anchor account comprises:
displaying a plurality of items in the item setting interface, wherein the plurality of items comprise items in an unset state, and the unset state is configured to indicate that the allowable transaction condition has not been set.

4. The method for processing the network data according to claim 1, wherein said displaying the item setting interface of the anchor account comprises:
displaying a plurality of items in the item setting interface, wherein the plurality of items comprise items in a set state, and the set state is configured to indicate that the allowable transaction condition has been set; and
said acquiring the allowable transaction condition of the target item in response to the operation of setting the transaction condition for the target item comprises:
acquiring a modified allowable transaction condition for the target item in response to an operation of modifying the transaction condition for the target item.

5. The method for processing the network data according to claim 1, further comprising:
acquiring a transaction parameter of the target item in response to an operation of setting the transaction parameter of the target item, wherein the transaction parameter comprises a first price of the target item corresponding to the first audience account, the first price is less than or equal to a second price of the target item corresponding to a second audience account, and the second audience account does not meet the allowable transaction condition.

6. The method for processing the network data according to claim 1, further comprising:
sending a transaction closing request to the server in response to a setting cancellation operation for the target item, wherein the transaction closing request is configured to instruct the server to delete issuing information of the target item in the live-streaming room, and close a transaction authority of the target item.

7. A method for processing network data, comprising:
displaying a live-streaming room interface of an anchor account, wherein the live-streaming room interface comprises a transaction entry of a target item and an allowable transaction condition has been set for the target item, and the allowable transaction condition is configured to indicate a condition that an audience account needs to meet when performing item transaction processing;
acquiring account information of a logged-in user account in response to a triggering operation on the transaction entry; and
displaying a transaction editing page of the target item in a case that the logged-in user account is determined as a first audience account based on the account information, wherein the first audience account meets the allowable transaction condition of the target item.

8. The method for processing the network data according to claim 7, wherein a setting indicator corresponding to the target item is displayed on the transaction entry, and the setting indicator is configured to indicate that an allowable transaction condition has been set; and
the method for processing the network data further comprises:
receiving issuing information of the target item, wherein the issuing information comprises the setting indicator corresponding to the target item.

9. The method for processing the network data according to claim 7, further comprising:
displaying an item list of the anchor account in a case that the logged-in user account is determined not to be the first audience account based on the account information, wherein the item list comprises the allowable transaction condition of the target item and a corresponding transaction button, and a state of the transaction button is an inoperable state;
modifying the state of the transaction button as an operable state in a case that authority opening information of the target item is received, wherein the authority opening information is configured to indicate that the logged-in user account meets the allowable transaction condition of the target item; and
displaying a transaction editing page of the target item in response to a triggering operation on the transaction button.

10. The method for processing the network data according to claim 9, wherein the item list further comprises current condition information of the logged-in user account; and
the method for processing the network data further comprises:
updating the current condition information of the logged-in user account as target information, wherein the target information is configured to indicate that the allowable transaction condition of the target item has been met.

11. A method for processing network data, comprising:
receiving an item issuing request, wherein the item issuing request is configured to instruct to issue a target item to a live-streaming room of an anchor account and to open a transaction authority of the target item to a first audience account, the first audience account meets an allowable transaction condition of the target item, and the allowable transaction condition is configured to indicate a condition that the audience account needs to meet when performing item transaction processing;
issuing the target item to the live-streaming room of the anchor account; and
opening the transaction authority of the target item to the first audience account.

12. The method for processing the network data according to claim 11, wherein said issuing the target item to the live-streaming room of the anchor account comprising:
sending issuing information of the target item to a plurality of user accounts in the live-streaming room, wherein the issuing information comprises a setting indicator corresponding to the target item, and the setting indicator is configured to indicate that the allowable transaction condition has been set.

13. The method for processing the network data according to claim 11, wherein said issuing the target item to the live-streaming room of the anchor account comprising:
determining a target user account in the live-streaming room based on a type of the allowable transaction condition of the target item; and
sending the issuing information of the target item to the target user account, wherein the issuing information comprises the setting indicator corresponding to the target item, and the setting indicator is configured to indicate that the allowable transaction condition has been set.

14. The method for processing the network data according to claim 13, wherein said determining the target user account in the live-streaming room based on the type of the allowable transaction condition comprises any of the followings:
determining the target user account in a case that the type of the allowable transaction condition is a target type, wherein the target user account is a plurality of user accounts in the live-streaming room, and the target type refers to a condition that a probability of meeting the allowable transaction condition within a target duration is greater than a probability threshold; and
determining the target user account in a case that the type of the allowable transaction condition is not the target type, wherein the target user account is an account that meets the allowable transaction condition at the current time.

15. The method for processing the network data according to claim 11, wherein said opening the transaction authority of the target item to the first audience account comprises:
determining account information of audience accounts in the live-streaming room; and
sending authority opening information to the audience account in a case that the account information of the audience account meets the allowable transaction condition of the target item, wherein the authority opening information is configured to indicate that the audience account meets the allowable transaction condition of the target item and the transaction authority of the target item has been opened to the audience account.

16. An apparatus for processing network data, comprising:
a displaying unit configured to display an item setting interface of an anchor account, wherein the item setting interface is configured to set an allowable transaction condition of an item, and the allowable transaction condition is configured to indicate a condition that an audience account needs to meet when performing item transaction processing;
an acquiring unit configured to acquire an allowable transaction condition of a target item in response to an operation of setting a transaction condition for the target item, wherein the target item is any item in the item setting interface; and
a sending unit configured to send an item issuing request to a server, wherein the item issuing request is configured to instruct the server to issue the target item to a live-streaming room of the anchor account and to open a transaction authority of the target item to a first audience account, and the first audience account meets the allowable transaction condition of the target item.

17. The apparatus for processing the network data according to claim 16, wherein the displaying unit is further configured to display item information of the target item and a corresponding setting indicator in an item selection interface of the anchor account, wherein the setting indicator is configured to indicate that the allowable transaction condition has been set, and the item selection interface is configured to select an item to be transacted during a live-streaming process of the anchor account; and
the sending unit is further configured to perform a step of sending the item issuing request to the server in response to a selection operation for the target item based on the item information.

18. The apparatus for processing the network data according to claim 16, wherein the displaying unit is configured to display a plurality of items in the item setting interface, wherein the plurality of items comprise items in an unset state, and the unset state is configured to indicate that the allowable transaction condition has not been set.

19. The apparatus for processing the network data according to claim 16, wherein the displaying unit is configured to display a plurality of items in the item setting interface, wherein the plurality of items comprise items in a set state, and the set state is configured to indicate that the allowable transaction condition has been set; and
the acquiring unit is configured to acquire a modified allowable transaction condition for the target item in response to an operation of modifying the transaction condition for the target item.

20. The apparatus for processing the network data according to claim 16, wherein the acquiring unit is further configured to acquire a transaction parameter of the target item in response to an operation of setting the transaction parameter of the target item, wherein the transaction parameter comprises a first price of the target item corresponding to the first audience account, the first price is less than or equal to a second price of the target item corresponding to a second audience account, and the second audience account does not meet the allowable transaction condition.

21. The apparatus for processing the network data according to claim 16, wherein the sending unit is further configured to send a transaction closing request to the server in response to a setting cancellation operation for the target item, wherein the transaction closing request is configured to instruct the server to delete issuing information of the target item in the live-streaming room, and close a transaction authority of the target item.

22. An apparatus for processing network data, comprising:
a displaying unit configured to display a live-streaming room interface of an anchor account, wherein the live-streaming room interface comprises a transaction entry of a target item and an allowable transaction condition has been set for the target item, and the allowable transaction condition is configured to indicate a condition that an audience account needs to meet when performing item transaction processing; and
an acquiring unit configured to acquire account information of a logged-in user account in response to a triggering operation on the transaction entry, wherein
the displaying unit is further configured to display a transaction editing page of the target item in a case that the logged-in user account is determined as a first audience account based on the account information, wherein the first audience account meets the allowable transaction condition of the target item.

23. The apparatus for processing the network data according to claim 22, wherein a setting indicator corresponding to the target item is displayed on the transaction entry, and the setting indicator is configured to indicate that the allowable transaction condition has been set; and
the apparatus for processing the network data further comprises:
a first receiving unit configured to receive issuing information of the target item, wherein the issuing information comprises the setting indicator corresponding to the target item.

24. The apparatus for processing the network data according to claim 22, further comprising:
the displaying unit is further configured to display an item list of the anchor account in a case that the logged-in user account is determined not to be the first audience account based on the account information, wherein the item list comprises the allowable transaction condition of the target item and a corresponding transaction button, and a state of the transaction button is an inoperable state;
a second receiving unit configured to receive authority opening information of the target item, wherein the authority opening information is configured to indicate that the logged-in user account meets the allowable transaction condition of the target item; and
a modifying unit configured to modify a state of the transaction button as an operable state, wherein the displaying unit is further configured to display a transaction editing page for the target item in response to a triggering operation on the transaction button.

25. The apparatus for processing the network data according to claim 24, wherein the item list also comprises current condition information of the logged-in user account; and
the apparatus for processing the network data further comprises:
an updating unit configured to update the current condition information of the logged-in user account as target information, wherein the target information is configured to indicate that the allowable transaction condition of the target item has been met.

26. An apparatus for processing network data, comprising:
a receiving unit configured to receive an item issuing request, wherein the item issuing request is configured to instruct to issue the target item to a live-streaming room of an anchor account and to open a transaction authority of the target item to a first audience account, the first audience account meets an allowable transaction condition of the target item, and the allowable transaction condition is configured to indicate a condition that the audience account needs to meet when performing item transaction processing;
an issuing unit configured to issue the target item to the live-streaming room of the anchor account; and
an opening unit configured to open the transaction authority of the target item to the first audience account.

27. The apparatus for the network data according to claim 26, the issuing unit is configured to send issuing information of the target item to a plurality of user accounts in the live-streaming room, wherein the issuing information comprises a setting indicator corresponding to the target item, and the setting indicator is configured to indicate that the allowable transaction condition has been set.

28. The apparatus for processing the network data according to claim 26, wherein the issuing unit is configured to:
determine a target user account in the live-streaming room based on a type of the allowable transaction condition of the target item; and
send the issuing information of the target item to the target user account, wherein the issuing information comprises the setting indicator corresponding to the target item, and the setting indicator is configured to indicate that the allowable transaction condition has been set.

29. The apparatus for processing the network data according to claim 28, wherein the issuing unit is configured to perform any of the followings:
determining the target user account in a case that the type of the allowable transaction condition is a target type, wherein the target user account is a plurality of user accounts in the live-streaming room, and the target type refers to a condition that a probability of meeting the allowable transaction condition within a target duration is greater than a probability threshold; and
determining the target user account in a case that the type of the allowable transaction condition is not the target type, wherein the target user account is an account that meets the allowable transaction condition at the current time.

30. The apparatus for processing the network data according to claim 26, wherein the opening unit is configured to:
determine account information of audience accounts in the live-streaming room; and
send authority opening information to the audience account in a case that the account information of the audience account meets the allowable transaction condition of the target item, wherein the authority opening information is configured to indicate that the audience account meets the allowable transaction condition of the target item and the transaction authority of the target item has been opened to the audience account.

31. A terminal, comprising:
one or more processors; and
one or more memories configured to store program codes executable by the one or more processors, wherein
the one or more processors are configured to execute the program codes so as to implement the following steps:
displaying an item setting interface of an anchor account, wherein the item setting interface is configured to set an allowable transaction condition of an item, and the allowable transaction condition is configured to indicate a condition that an audience account needs to meet when performing item transaction processing;
acquiring an allowable transaction condition of a target item in response to an operation of setting a transaction condition for the target item, wherein the target item is any item in the item setting interface; and
sending an item issuing request to a server, wherein the item issuing request is configured to instruct the server to issue the target item to a live-streaming room of the anchor account and to open a transaction authority of the target item to a first audience account, and the first audience account meets the allowable transaction condition of the target item.

32. The terminal according to claim 31, wherein the one or more processors are configured to execute the program codes so as to implement the following steps:
displaying item information of the target item and a corresponding setting indicator in an item selection interface of the anchor account, wherein the setting indicator is configured to indicate that the allowable transaction condition has been set, and the item selection interface is configured to select an item to be transacted during a live-streaming process of the anchor account; and
performing a step of sending the item issuing request to the server in response to a selection operation for the target item based on the item information.

33. The terminal according to claim 31, wherein the one or more processors are configured to execute the program codes so as to implement the following steps:
displaying a plurality of items in the item setting interface, wherein the plurality of items comprise items in an unset state, and the unset state is configured to indicate that the allowable transaction condition has not been set.

34. The terminal according to claim 31, wherein a plurality of items are displayed in the item setting interface, the plurality of items comprise items in a set state, and the set state is configured to indicate that the allowable transaction condition has been set; and
the one or more processors are configured to execute the program codes so as to implement the following step:
acquiring a modified allowable transaction condition for the target item in response to an operation of modifying the transaction condition for the target item.

35. The terminal according to claim 31, wherein the one or more processors are configured to execute the program codes so as to implement the following steps:
acquiring a transaction parameter of the target item in response to an operation of setting the transaction parameter of the target item, wherein the transaction parameter comprises a first price of the target item corresponding to the first audience account, the first price is less than or equal to a second price of the target item corresponding to a second audience account, and the second audience account does not meet the allowable transaction condition.

36. The terminal according to claim 31, wherein the one or more processors are configured to execute the program codes so as to implement the following step:
sending a transaction closing request to the server in response to a setting cancellation operation for the target item, wherein the transaction closing request is configured to instruct the server to delete issuing information of the target item in the live-streaming room, and close a transaction authority of the target item.

37. A terminal, comprising:
one or more processors; and
one or more memories configured to store program codes executable by the one or more processors, wherein
the one or more processors are configured to execute the program codes so as to implement the following steps:
displaying a live-streaming room interface of an anchor account, wherein the live-streaming room interface comprises a transaction entry of a target item and an allowable transaction condition has been set for the target item, and the allowable transaction condition is configured to indicate a condition that an audience account needs to meet when performing item transaction processing;
acquiring account information of a logged-in user account in response to a triggering operation on the transaction entry; and
displaying a transaction editing page of the target item in a case that the logged-in user account is determined as a first audience account based on the account information, wherein the first audience account meets the allowable transaction condition of the target item.

38. The terminal according to claim 37, wherein a setting indicator corresponding to the target item is displayed on the transaction entry, and the setting indicator is configured to indicate that an allowable transaction condition has been set; and
the one or more processors are configured to execute the program codes so as to implement the following step:
receiving issuing information of the target item, wherein the issuing information comprises the setting indicator corresponding to the target item.

39. The terminal according to claim 37, wherein the one or more processors are configured to execute the program codes so as to implement the following steps:
displaying an item list of the anchor account in a case that the logged-in user account is determined not to be the first audience account based on the account information, wherein the item list comprises the allowable transaction condition of the target item and a corresponding transaction button, and a state of the transaction button is an inoperable state;
modifying the state of the transaction button as an operable state in a case that authority opening information of the target item is received, wherein the authority opening information is configured to indicate that the logged-in user account meets the allowable transaction condition of the target item; and
displaying a transaction editing page of the target item in response to a triggering operation on the transaction button.

40. The terminal according to claim 39, wherein the item list also comprises current condition information of the logged-in user account; and
the one or more processors are configured to execute the program codes so as to implement the following step: the method for processing the network data further comprises:
updating the current condition information of the logged-in user account as target information, wherein the target information is configured to indicate that the allowable transaction condition of the target item has been met.

41. A server, comprising:
one or more processors; and
one or more memories configured to store program codes executable by the one or more processors, wherein
the one or more processors are configured to execute the program codes so as to implement the following steps:
receiving an item issuing request, wherein the item issuing request is configured to instruct to issue the target item to a live-streaming room of an anchor account and to open a transaction authority of the target item to a first audience account, the first audience account meets an allowable transaction condition of the target item, and the allowable transaction condition is configured to indicate a condition that the audience account needs to meet when performing item transaction processing;
issuing the target item to the live-streaming room of the anchor account; and
opening the transaction authority of the target item to the first audience account.

42. The server according to claim 41, wherein the one or more processors are configured to execute the program codes so as to implement the following steps:
sending the issuing information of the target item to a plurality of user accounts in the live-streaming room, wherein the issuing information comprises a setting indicator corresponding to the target item, and the setting indicator is configured to indicate that the allowable transaction condition has been set.

43. The server according to claim 41, wherein the one or more processors are configured to execute the program codes so as to implement the following steps:
determining a target user account in the live-streaming room based on a type of the allowable transaction condition of the target item; and
sending the issuing information of the target item to the target user account, wherein the issuing information comprises the setting indicator corresponding to the target item, and the setting indicator is configured to indicate that the allowable transaction condition has been set.

44. The server according to claim 43, wherein the one or more processors are configured to execute the program codes so as to implement the following steps:
determining the target user account in a case that the type of the allowable transaction condition is a target type, wherein the target user account is a plurality of user accounts in the live-streaming room, and the target type refers to a condition that a probability of meeting the allowable transaction condition within a target duration is greater than a probability threshold; and
determining the target user account in a case that the type of the allowable transaction condition is not the target type, wherein the target user account is an account that meets the allowable transaction condition at the current time.

45. The server according to claim 41, wherein the one or more processors are configured to execute the program codes so as to implement the following steps:
determining account information of audience accounts in the live-streaming room; and
sending authority opening information to the audience account in a case that the account information of the audience account meets the allowable transaction condition of the target item, wherein the authority opening information is configured to indicate that the audience account meets the allowable transaction condition of the target item and the transaction authority of the target item has been opened to the audience account.

46. A non-volatile computer-readable storage medium, wherein program codes in the computer-readable storage medium, when being executed by a processor of a terminal, enable the terminal to perform the following steps:
displaying an item setting interface of an anchor account, wherein the item setting interface is configured to set an allowable transaction condition of an item, and the allowable transaction condition is configured to indicate a condition that an audience account needs to meet when performing item transaction processing;
acquiring an allowable transaction condition of a target item in response to an operation of setting a transaction condition for the target item, wherein the target item is any item in the item setting interface; and
sending an item issuing request to a server, wherein the item issuing request is configured to instruct the server to issue the target item to a live-streaming room of the anchor account and to open a transaction authority of the target item to a first audience account, and the first audience account meets the allowable transaction condition of the target item.

47. A non-volatile computer-readable storage medium, wherein program codes in the computer-readable storage medium, when being executed by a processor of a terminal, enable the terminal to perform the following steps:
displaying a live-streaming room interface of an anchor account, wherein the live-streaming room interface comprises a transaction entry of a target item and an allowable transaction condition has been set for the target item, and the allowable transaction condition is configured to indicate a condition that an audience account needs to meet when performing item transaction processing;
acquiring account information of a logged-in user account in response to a triggering operation on the transaction entry; and
displaying a transaction editing page of the target item in a case that the logged-in user account is determined as a first audience account based on the account information, wherein the first audience account meets the allowable transaction condition of the target item.

48. A non-volatile computer-readable storage medium, wherein program codes in the computer-readable storage medium, when being executed by a processor of a server, enable the terminal to perform the following steps:
receiving an item issuing request, wherein the item issuing request is configured to instruct to issue the target item to a live-streaming room of an anchor account and to open a transaction authority of the target item to a first audience account, the first audience account meets an allowable transaction condition of the target item, and the allowable transaction condition is configured to indicate a condition that the audience account needs to meet when performing item transaction processing;
issuing the target item to the live-streaming room of the anchor account; and
opening the transaction authority of the target item to the first audience account.

49. A computer program product, comprising a computer program, wherein the computer program, when being executed by a processor, performs the following steps:
displaying an item setting interface of an anchor account, wherein the item setting interface is configured to set an allowable transaction condition of an item, and the allowable transaction condition is configured to indicate a condition that an audience account needs to meet when performing item transaction processing;
acquiring an allowable transaction condition of a target item in response to an operation of setting a transaction condition for the target item, wherein the target item is any item in the item setting interface; and
sending an item issuing request to a server, wherein the item issuing request is configured to instruct the server to issue the target item to a live-streaming room of the anchor account and to open a transaction authority of the target item to a first audience account, and the first audience account meets the allowable transaction condition of the target item.

50. A computer program product, comprising a computer program, wherein the computer program, when being executed by a processor, performs the following steps:
displaying a live-streaming room interface of an anchor account, wherein the live-streaming room interface comprising a transaction entry of a target item and an allowable transaction condition has been set for the target item, and the allowable transaction condition is configured to indicate a condition that an audience account needs to meet when performing item transaction processing;
acquiring account information of a logged-in user account in response to a triggering operation on the transaction entry; and
displaying a transaction editing page of the target item in a case that the logged-in user account is determined as a first audience account based on the account information, wherein the first audience account meets the allowable transaction condition of the target item.

51. A computer program product, comprising a computer program, wherein the computer program, when being executed by a processor, performs the following steps:
receiving an item issuing request, wherein the item issuing request is configured to instruct to issue the target item to a live-streaming room of an anchor account and to open a transaction authority of the target item to a first audience account, the first audience account meets an allowable transaction condition of the target item, and the allowable transaction condition is configured to indicate a condition that the audience account needs to meet when performing item transaction processing;
issuing the target item to the live-streaming room of the anchor account; and
opening the transaction authority of the target item to the first audience account.
